(19) Europäisches Patentamt / European Patent Office / Office européen des brevets

(11) **EP 3 515 704 B1**

(12) **EUROPEAN PATENT SPECIFICATION**

(45) Date of publication and mention
of the grant of the patent:
**15.10.2025 Bulletin 2025/42**

(21) Application number: **17768579.9**

(22) Date of filing: **06.09.2017**

(51) International Patent Classification (IPC):
**G10K 11/168** *(2006.01)* **B32B 17/10** *(2006.01)*

(52) Cooperative Patent Classification (CPC):
**G10K 11/168; B32B 17/10036; B32B 17/10045;
B32B 17/10165; B32B 17/1055; B32B 17/10761;**
B32B 2250/03; B32B 2307/102

(86) International application number:
**PCT/US2017/050174**

(87) International publication number:
**WO 2018/057287 (29.03.2018 Gazette 2018/13)**

(54) **SOUND ATTENUATING MULTIPLE LAYER LAMINATES**

SCHALLDAMPFENDE MEHRSCHICHTLAMINATE

STRATIFIES MULTICOUCHES D'ATTÉNUATION ACOUSTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.09.2016 US 201615270105**

(43) Date of publication of application:
**31.07.2019 Bulletin 2019/31**

(73) Proprietor: **Solutia Inc.**
**St. Louis, Missouri 63141 (US)**

(72) Inventor: **LU, Jun**
**East Longmeadow**
**MA 01028 (US)**

(74) Representative: **Ricker, Mathias**
**Wallinger Ricker Schlotter Tostmann
Patent- und Rechtsanwälte Partnerschaft mbB
Zweibrückenstraße 5-7
80331 München (DE)**

(56) References cited:
**EP-A1- 0 204 188 AU-B2- 2012 204 079
US-A- 5 190 826 US-A1- 2002 150 744
US-A1- 2008 102 280 US-A1- 2013 236 711
US-A1- 2015 158 276 US-A1- 2016 111 077
US-A1- 2016 159 043**

**Description**

**BACKGROUND**

**1. Field of the Invention**

This disclosure relates to multiple layer panels comprising at least three rigid substrates and at least two acoustic interlayers, wherein the rigid substrates and acoustic interlayers are alternately stacked such that at least one of the rigid substrate is in between the two acoustic interlayers. More specifically, the present invention discloses multiple layer glass laminates comprising a first glass sheet, a second glass sheet, a third glass sheet, a first acoustic interlayer disposed between and in contact with the first and second glass sheets, and a second acoustic interlayer disposed between and in contact with the second and third glass sheet.

**2. Description of Related Art**

Occupants of buildings, especially in areas near airports, railways, and human activities, or where street and highway traffic noise is a problem, are increasingly interested in acoustic insulating glazing. Automobile designers are also aware that one barrier to designing quieter car interiors is the acoustic limitations of automotive glass. As automobile manufacturers have increased their efforts to design and build quieter cars and reduce vehicle interior noise through the treatment of passenger compartment boundaries with sound-attenuating packages, automotive glazing has become the primary transmission path of wind noise, external airborne noise and structure-borne noise, and it is a major contributor to the consumer's perception of vehicle interior noise level.

Laminated glass, made of a thermoplastic interlayer sandwiched by two panes of glass sheet, has long served for safety purposes and is often used as a transparent barrier in architectural and automotive applications. One of its primary functions is to absorb energy resulting from impact or a blow without allowing penetration of the object through the glass and to keep the glass bonded even when the applied force is sufficient to break the glass. This prevents dispersion of sharp glass shards, which minimizes injury and damage to people or objects within an enclosed area. Less known is the advantage of laminated glass for noise attenuation. Over the past decades, architectural use of laminated glass in buildings near airports and railways has served to reduce the noise levels inside the buildings, making it more comfortable for the occupants. Likewise this technology is now being used in buildings where street and highway traffic noise is a problem. Recently, advances in interlayer technology have made improved laminated glass that provides noise and vibration improvements for automotive glass.

The noise transmission through the glazing is a major contributor to the consumer's perception of vehicle interior noise level. The windshield and side windows are of particular importance for the interior noise level and are one of the acoustic limitations to designing quieter car interiors. Acoustic energy can be transmitted rather easily through windshields and side windows compared to other areas of the passenger compartment boundaries. At high operating speeds, aerodynamic pressure fluctuations resulting from exterior airflow in the vicinity of the windshield and side windows are very strong, causing the glass surface to radiate noise to the vehicle interior. Airflows impinging on panel edges and bends can generate acoustic noise with subsequent airborne transmission to the vehicle interior. The transmission of airborne noise generated by adjacent moving vehicles and structure-borne noise due to structural vibration of the car body are also the subject of noise transmission through windshields and side windows.

The sound insulation property of a glass panel can be characterized by Sound Transmission Loss (STL). Glass reacts best to excitation frequencies that match their natural frequencies. Because of low internal damping, glass resonates readily at low frequencies, which are determined by stiffness, mass and dimensions of a glass panel, and increases sound transmission. Above the low frequency resonant region to below the coincident frequency region (typically 300 Hertz (Hz) to less than 2500 Hz for a windshield or side glass), the mass of glass dominates the sound transmission and the glass follows the mass law of acoustics. In the mass law controlled region, the sound transmission loss increases about 6 decibels (dB) with increasing frequency by one octave band, and increases about 6 dB by doubling the glass thickness or surface density of the glass.

It is well known that sound transmission through glass exhibits coincident effect. Glass has a specific critical or coincident frequency at which the speed of an incident acoustical wave in air matches that of the glass bending wave. At the coincident frequency, the acoustic wave is especially effective at causing glass to vibrate, and the vibrating glass is an effective sound radiator at or near the coincident frequency and at frequencies above or below the coincident frequency or in the coincident frequency region. As a result, glass exhibits a dip or decrease in sound transmission loss, referred to as the coincidence dip or coincident effect, and the glass becomes transparent to sound.

The coincident frequency can be represented by equation (1):

$$f_c = c^2/2\pi \times [\rho_s/B]^{1/2} \qquad\qquad (1)$$

where c is the sound speed in air, $\rho_s$ is the surface density of the glass panel, and B is the bending stiffness of the glass panel. In general, the coincident frequency increases with decreasing thickness of the glass panel. For automotive glazings, the coincident frequency is typically in the range of 3150 to 6300 Hz, which is well within the wind noise frequency region of 2000 to 8000 Hz. For laminated architectural building glass (such as windows), the coincident frequency is generally less than about 3150 Hz.

The coincident effect not only results in a dip or decrease in sound transmission loss at the coincident frequency, but also reduces sound transmission loss in the coincident frequency region. Glass panels exhibiting severe coincident effect (low STL) at the coincident frequency will transmit sound more dominantly at that frequency, resulting in an enclosed area (such as the interior of a car or a room in a building) with high sound intensity at or near the coincident frequency.

The thermoplastic polymer found in laminated safety glass, such as windshields, can consist of a thermoplastic polymer, such as poly(vinyl acetal) or poly(vinyl butyral) (PVB), that has had one or more physical characteristics modified in order to increase acoustic dampening and reduce the sound transmission through the glass. Acoustic interlayers are such interlayers that minimize the resonance and coincident effect of glass and increase sound transmission loss at resonance frequencies and in the coincident region. Acoustic interlayers can be monolithic sheets having low glass transition temperatures or multilayer interlayers having two or more adjacent layers of thermoplastic polymer wherein the layers have dissimilar characteristics (see, for example U.S. Patents 5,340,654, 5,190,826, and 7,510,771). These multilayered interlayers may include at least one inner "core" layer sandwiched between two outer "skin" layers. Often, the core layer of an interlayer may be a softer layer having a lower glass transition temperature, which enhances its acoustic performance. However, because such soft layers can be difficult to easily process and/or transport, the skin layers of such multilayered interlayers are often stiffer, with higher glass transition temperatures, which imparts enhanced processability, strength, and impact resistance to the interlayer.

Acoustic interlayers improve the glass performance with respect to sound transmission in the coincident frequency region by reducing overall bending stiffness of the laminate and discontinuing the acoustic impedance of each glass layer. The equivalent coincident frequency of the laminated glass is, therefore, shifted to a higher and less important frequency range. When the outer glass layers are driven to bending waves, the viscous inner layer (the acoustic interlayer) creates shear strains within itself, and the bending wave energy of glass is transformed into heat energy by the interlayer. This results in a reduction of sound transmission in the coincident region and the coincident effect of the glass is essentially eliminated.

Despite these improvements and advances, there is a continued need to further improve the acoustic properties and reduce the sound or noise transmission through the coincident frequency region. Accordingly, there is a need in the art for the development of acoustic glass panels that further provide improved acoustic or sound insulation properties without a reduction in other optical, mechanical, and physical characteristics.

US 5,190,826 A describes sound insulating panels comprising three rigid panels interleaved with sound insulating interlayers.

US 2008/102280 A1 describes sound insulating panels with e.g. three glass layers separated by sound insulating multilayer interlayers. US 2016/159043 A1 discloses a monolithic interlayer composition comprising polyvinylacetal and a plasticizer, wherein the composition has a Tg of at least 46°C.

US 2013/236711 A1 discloses a multilayer glass panel comprising a first and a second glass substrate and a polymer layer interposed between said first and second glass substrated, the polymer having a glass transition temperature of greater than 33°C.

US 2016/111077 A1 discloses a polymer interlayer comprising a soft layer with a first and a second poly(vinyl butyral) resin, a plasticizer and a stiffer layer, the interlayer being characterized by a dampening loss factor.

EP 0 204 188 A1 discloses a sound dampening panel comprising resin interlayers, two glass panels.

AU 2012 204 079 B2 describes sound insulating panels with three layers separated by sound insulating interlayers.

US 2002/150744 A1 discloses a laminated glass comprising at least three glass sheets and interliners interposed between the adjacent glass sheets.

US 2015/158275 A1 discloses that acoustic interlayer composition may have a glass transition temperature less than 25°C.

## SUMMARY

The invention is set forth in the appended claims.

In one aspect the present invention concerns a sound insulating multiple layer glass panel comprising: a first glass panel having a first glass thickness; a first interlayer having a first interlayer thickness and a first glass transition temperature of less than 25°C adjacent the first glass panel; a second glass panel having a second glass thickness adjacent the first interlayer; a second interlayer having a second interlayer thickness and a second glass transition temperature of less than 25°C adjacent the second glass panel; a third glass panel having a third glass thickness adjacent the second interlayer; wherein the multiple layer glass panel has a combined glass thickness, a combined interlayer thickness and a total thickness; wherein the second glass panel is disposed between the first interlayer and the second interlayer;

wherein at least one of the first or the second interlayer is a multilayer interlayer having at least three layers of at least a first stiff layer, a second stiff layer, and a third soft layer disposed between the first and second stiff layers and the glass transition temperature of the soft layer is less than 25°C, the glass temperature being measured as set out in the description.

## BRIEF DESCRIPTION OF THE DRAWINGS

FIG. 1 is an example of a multiple layer glass panel of the present disclosure comprising three glass panes and two acoustic interlayers sandwiched between the glass panes.

FIG. 2 is a more detailed example of the multiple layer glass panel of FIG. 1 showing the multiple layers of Interlayer A and Interlayer B.

FIG. 3 is an example of a conventional multiple layer glass panel having a first glass sheet, a second glass sheet, and an acoustic multilayer (tri-layer) interlayer disposed between the first and second glass sheets.

FIG. 4 is another example of a conventional multiple layer glass consisting of only two glass sheets with two interlayers disposed between the glass sheets.

FIG. 5 is another example of a conventional multiple layer glass panel consisting of a first glass sheet, a second different glass sheet, and two interlayers between the glass sheets.

FIG. 6 is a graph of the sound transmission loss of several multiple layer panels formed and tested as described in Example 1.

FIG. 7 is a graph of the sound transmission loss of the remaining multiple layer panels formed and tested as described in Example 1.

FIG. 8 is a graph of the sound transmission loss of several multiple layer panels formed and tested as described in Example 2.

FIG. 9 is a graph of the sound transmission loss of several multiple layer panels formed and tested as described in Example 3.

## DETAILED DESCRIPTION

The present disclosure refers to multiple layer panels comprising at least three rigid substrates and at least two acoustic interlayers, wherein the rigid substrates and acoustic interlayers are arranged such that at least one of the rigid substrates is between the two acoustic interlayers. More specifically, the present disclosure refers to multiple layer glass laminates comprising a first glass sheet, a second glass sheet, a third glass sheet, a first acoustic interlayer between the first and second glass sheets, and a second acoustic interlayer between the second and third glass sheets. Glass panels according to the present disclosure improve sound insulation performance over conventional panels having only two rigid substrates and one or more acoustic interlayers (glass//acoustic PVB)//glass). Glass panels of the present disclosure also improve sound insulation performance over panels having three glass sheets that do not have at least two acoustic layers (i.e., they have one or more non-acoustic layers, such as glass//non-acoustic PVB//glass//non-acoustic PVB//glass or glass//non-acoustic PVB//glass//acoustic PVB//glass).

The improvement in sound insulation cannot be achieved with glass panels composing a first glass sheet, a second glass sheet, a third glass sheet, an acoustic interlayer between the first and second glass sheets, and a non-acoustic interlayer between the second and third glass sheet (glass//non-acoustic PVB//glass//acoustic PVB//glass). The improvement in sound insulation is also not achieved with two non-acoustic interlayers with one interlayer between the first and second glass sheets and the other interlayer between the second and third glass sheets (glass//non-acoustic PVB//glass//non-acoustic PVB//glass). In other words, glass panels comprising only one acoustic interlayer and at least one non-acoustic interlayer or all non-acoustic interlayers and three or more glass sheets show little or no improvement in sound insulation property over conventional glass panels comprising two glass sheets with an acoustic interlayer sandwiched between the glass sheets, as further described below.

Multiple layer panels as described herein generally comprise at least a first rigid substrate, a second rigid substrate, and a third rigid substrate, and a first interlayer disposed between and in contact with each of the first and second substrates and a second interlayer disposed between and in contact with each of the second and third substrates. Each of the first, second, and third substrates can be formed of a rigid material, such as glass, and may be formed from the same, or from different, materials. In some embodiments, at least one of the first, second, and third substrates can be a glass substrate, while, in other embodiments, at least one of the first, second, and third substrates can be formed of another material including, for example, a rigid polymer such as polycarbonate, copolyesters, acrylic, polyethylene terephthalate, and combinations thereof. In embodiments, at least two of the rigid substrates are glass, at least three of the rigid substrates are glass, or all of the rigid substrates are glass. Any suitable type of non-glass material may be used to form such a substrate, depending on the required performance and properties. Typically, none of the first, second, or third substrates are formed from softer polymeric materials, including thermoplastic polymer materials as described in detail below.

Any suitable type of glass may be used to form the rigid glass substrate, and, in some embodiments, the glass may be selected from the group consisting of alumina-silicate glass, borosilicate glass, quartz or fused silica glass, and soda lime glass. The glass substrate, when used, may be annealed, thermally-strengthened or tempered, chemically-tempered, etched, coated, or strengthened by ion exchange, or it may have been subjected to one or more of these treatments. The glass itself may be rolled glass, float glass, or plate glass. In some embodiments, the glass may not be chemically-treated or strengthened by ion exchange, while, in other embodiments, the glass may not be an alumina-silicate glass. When the first, second, and third substrates are glass substrates, the type of glass used to form each substrate may be the same or it may be different. For example, in embodiments, two of the glass substrates may be the same and a third or subsequent glass substrate may be different, or all three glass substrates may be different.

The first, second, and third substrates can have any suitable thickness. In some embodiments, when the rigid substrates are all glass substrates, the nominal thickness of at least one of the glass sheets (Glass 1, Glass 2, and Glass 3, and any other glass sheets) ranges from 0.1 mm to 12.7 mm and the multiple layer glass panels include the configurations of any combinations of Glass 1, Glass 2, and Glass 3 (and any other glass sheets, if desired). In some embodiments, the nominal thickness of the first, second, and/or third substrates can be at least about 0.4, at least about 0.7, at least about 1.0, at least about 1.3, at least about 1.6, at least about 1.9, at least about 2.2, at least about 2.5, or at least about 2.8 and/or less than about 3.2, less than about 2.9, less than about 2.6, less than about 2.3, less than about 2.0, less than about 1.7, less than about 1.4, or less than about 1.1 mm.

Additionally, or in the alternative, the first, second, and/or third substrates can have a nominal thickness of at least about 2.3, at least about 2.6, at least about 2.9, at least about 3.2, at least about 3.5, at least about 3.8, or at least about 4.1 and/or less than about 12.7, less than about 12, less than about 11.5, less than about 10.5, less than about 10, less than about 9.5, less than about 9, less than about 8.5, less than about 8, less than about 7.5, less than about 7, less than about 6.5, less than about 6, less than about 5.5, less than about 5, or less than about 4.5 mm.

According to some embodiments, the multiple layer glass panels comprise at least three sheets of glass of the same or different thickness, more than three, or more than four sheets of glass of the same or different thickness. In some embodiments, two of the glass sheets have the same thickness, such as the first and second glass sheets have the same thickness, the first and third glass sheets have the same thickness, or the second and third glass sheets have the same thickness. In some embodiments, the glass sheets all have the same thickness. In other embodiments, the thickness of the first glass sheet is greater than the thickness of each of the second and third glass sheets; or the thickness of the second glass is greater than the thickness of each of first and third glass sheets; or the thickness of second glass sheet is less than the thickness of the first glass sheet and greater than the thickness of third glass sheet; or the thickness of second glass sheet is less than the thickness of each of the first and third glass sheets. Other combinations are possible, and any combination of thicknesses may be used as desired depending on the required properties.

When two or more glass sheets in the multiple layer panel have different nominal thicknesses, the difference between the nominal thicknesses of the glass sheets can be at least about 0.01 mm. In some embodiments, at least one glass sheet has a nominal thickness that can be at least about 0.05, at least about 0.1, at least about 0.2, at least about 0.3, at least about 0.4, at least about 0.5, at least about 0.6, at least about 0.7, at least about 0.8, at least about 0.9, at least about 1.0, at least about 1.2, at least about 1.6, at least about 2.0, at least about 3.0, or at least about 4.0 mm thicker than the nominal thickness of at least one of the other glass sheets, or each of the other glass sheets.

In addition to the rigid substrates, multiple layer panels as described herein include at least a first polymeric acoustic interlayer disposed between and in contact with each of the first and second rigid substrates and a second polymeric acoustic interlayer disposed between and in contact with each of the second and third rigid substrates. As used herein, the terms "interlayer", "polymer interlayer" and "polymeric interlayer" refer to a single or multiple layer polymer sheet suitable for use in forming multiple layer panels. As used herein, the terms "single layer" and "monolithic" refer to interlayers formed of one single polymer layer, while the terms "multiple layer" or "multilayer" refer to interlayers having two or more polymer layers adjacent to and in contact with one another that are coextruded, laminated, or otherwise coupled to one another. Each polymer layer of an interlayer may include one or more polymeric resins, optionally combined with one or more plasticizers, which have been formed into a sheet by any suitable method. One or more of the polymer layers in an interlayer may further include additional additives, although these are not required.

As used herein, the terms "polymer resin composition" and "resin composition" refer to compositions including one or more polymer resins. Polymer compositions may optionally include other components, such as plasticizers and/or other additives.

The first acoustic interlayer and the second acoustic interlayer can be monolithic interlayers, multilayer interlayers (such as tri-layers), or a combination of monolithic and multilayer acoustic interlayers. When the first acoustic interlayer and the second acoustic interlayer are either both monolithic interlayers or both multilayer interlayers, the two acoustic interlayers can have the same composition and/or thickness, or they can have different compositions and/or thicknesses.

Examples of suitable thermoplastic polymers can include, but are not limited to, poly(vinyl acetal) resins, polyurethanes (PU), poly(ethylene-co-vinyl acetate) resins (EVA), polyvinyl chlorides (PVC), poly(vinylchloride-co-methacrylate), polyethylenes, polyolefins, ethylene acrylate ester copolymers, poly(ethylene-co-butyl acrylate), silicone elastomers, epoxy resins, and acid copolymers such as ethylene/carboxylic acid copolymers and ionomers thereof, derived from any of the previously-listed polymers, and combinations thereof. In some embodiments, one or more layers of a multiple layer interlayer can include a thermoplastic polymer which can be selected from the group consisting of poly(vinyl acetal) resins, polyvinyl chlorides, polyethylene vinyl acetates, and polyurethanes. In certain embodiments, one or more of the polymer layers can include at least one poly(vinyl acetal) resin. Although generally described herein with respect to poly(vinyl acetal) resins, it should be understood that one or more of the above polymer resins could be included with, or in place of, the poly(vinyl acetal) resins described below in accordance with various embodiments of the present disclosure.

Polyurethanes suitable for use in the layers and interlayers can have different hardnesses. An exemplary polyurethane polymer has a Shore A hardness less than 85 per ASTM D-2240. Examples of polyurethane polymers are AG8451 and AG5050, aliphatic isocyanate polyether based polyurethanes having glass transition temperatures less than 20°C (commercially available from Thermedics Inc. of Woburn, MA). EVA polymers can contain various amounts of vinyl acetate groups. The desirable vinyl acetate content is generally from about 10 to about 90 mol%. EVA with lower vinyl acetate content can be used for sound insulation at low temperatures. When included, the ethylene/carboxylic acid copolymers are generally poly(ethylene-co-methacrylic acid) and poly(ethylene-co-acrylic acid) with a carboxylic acid content of from about 1 to about 25 mol%. Ionomers of ethylene/carboxylic acid copolymers can be obtained by partially or fully neutralizing the copolymers with a base, such as the hydroxide of alkali (sodium for example) and alkaline metals (magnesium for example), ammonia, or other hydroxides of transition metals such as zinc. Examples of ionomers that are suitable include Surlyn® ionomers resins (commercially available from DuPont of Wilmington, Delaware).

Thermoplastic polymer resins may be formed by any suitable method. When the thermoplastic polymer resins include poly(vinyl acetal) resins, such resins may be formed by acetalization of poly(vinyl alcohol) with one or more aldehydes in the presence of a catalyst according to known methods such as, for example, those described in U.S. Patent Nos. 2,282,057 and 2,282,026, as well as "Vinyl Acetal Polymers," in the Encyclopedia of Polymer Science & Technology, 3rd ed., Volume 8, pages 381-399, by B.E. Wade (2003). The resulting poly(vinyl acetal) resins may include at least about 50, at least about 60, at least about 70, at least about 75, at least about 80, at least about 85, at least about 90 weight percent of residues of at least one aldehyde, measured according to ASTM D1396 as the percent acetalization of the resin. The total amount of aldehyde residues in a poly(vinyl acetal) resin can be collectively referred to as the acetal content, with the balance of the poly(vinyl acetal) resin being residual hydroxyl groups (as vinyl hydroxyl groups) and residual ester groups (as vinyl acetate groups), as discussed in further detail below.

Monolithic acoustic interlayers suitable for use in the glass panels of the disclosure can have glass transition temperatures that typically are lower than about 25°C and/or have a damping loss factor (or loss factor) at 20°C of at least about 0.10. Non-acoustic interlayers typically have glass transition temperatures that are higher than 26°C and/or damping loss factors at 20°C of about 0.06 or less. In embodiments when two monolithic acoustic interlayers are present, the first monolithic acoustic interlayer and the second monolithic interlayer may have the same glass transition temperature, while in other embodiments, the glass transition temperature of the first monolithic acoustic interlayer is different from the glass transition temperature of the second monolithic interlayer. The monolithic interlayer can comprise one or more polymer resins. In embodiments, the thermoplastic resin is a poly(vinyl acetal) resin, such as poly(vinyl butyral) (PVB). In embodiments, the resin, or at least one resin, in the monolithic interlayer has at least one of the following characteristics: lower residual hydroxyl; higher residual vinyl acetate content; lower residual hydroxyl content and higher residual acetate content; high plasticizer content; different aldehydes; mixed aldehydes; or a combination of any two or more properties as discussed below. In embodiments, the monolithic acoustic interlayer typically has higher plasticizer content than conventional, non-acoustic monolithic interlayers. In embodiments, monolithic acoustic PVB interlayers can be produced by mixing PVB resin having a lower residual hydroxyl content (weight percent PVOH), such as 17 weight percent or less, with higher amounts of a plasticizer, such as triethylene glycol di-(2-ethylhexanoate) (3GEH), and extruding the mixture to form a polymer interlayer. Alternatively, monolithic PVB interlayers having acoustic properties can be produced by mixing PVB resin having a higher residual hydroxyl content, such as 18 weight percent or more, with a high amount of a plasticizer, or a mixture of plasticizers in which at least one plasticizer in the mixture is more efficient in plasticizing PVB resin than conventional plasticizer (such as 3GEH), and extruding the mixture to form a polymer interlayer. In embodiments, at least one interlayer, or at least two interlayers, or all interlayers are monolithic interlayers. In embodiments, at least one interlayer, or at least two interlayers, or all interlayers are multiple layer interlayers.

Multiple layer interlayers used in the glass panels of the disclosure include any interlayer having at least two layers and having acoustic properties, such as multiple layer acoustic interlayers comprising at least a first stiff layer, a second stiff layer, and a third soft layer disposed between the first and second stiff layers (such as commercially available tri-layers). Additional numbers of layers and interlayer combinations are possible, such as, soft/stiff/soft, soft/stiff/soft/-stiff/soft, stiff/soft/stiff/soft/stiff, stiff/soft/soft/stiff, and other embodiments known to one skilled in the art.

Multilayer acoustic interlayers suitable for use in multiple layer glass panels of the present disclosure include interlayers comprising a soft layer with one or more physical characteristics modified in order to increase the acoustic dampening property and reduce the sound transmission through the glass and stiff outer layers, usually skin layers, providing handling, processability, and mechanical strength of the interlayer. One of the unique physical characteristics that is modified in order to achieve the improved sound insulation property is the lower glass transition temperature of the soft layer. In embodiments, a suitable glass transition temperature of the soft layer is less than about 25, less than about 20, less than about 15, less than about 10, less than about 5, less than about 0, or less than about -5°C. In addition to the lower glass transition temperature of the soft layer, the multilayer acoustic interlayers suitable for use in multiple layer glass panels of the present disclosure may include interlayers have damping loss factors at 20°C of at least 0.10.

Examples of exemplary multilayer interlayer constructs include, but are not limited to, PVB//PVB//PVB, PVnB//PViB//PVnB, where the PVB (poly(vinyl butyral), PVnB (polyvinyl n-butyral) and/or PViB (poly(vinyl i-butyral) layer comprises a single resin or two or more resins having different residual hydroxyl contents or different polymer compositions; PVC//PVB//PVC, PVB//PVC//PVB, PVB//PU//PVB, PU//PVB//PU, Ionomer//PVB//Ionomer, Ionomer//-PU//Ionomer, Ionomer//EVA//Ionomer, Ionomer//Ionomer//Ionomer, where the soft core layer (PVB (including PVisoB), PVC, PU, EVA or ionomer) comprises a single resin or two or more resins having different glass transition temperatures. Alternatively, the skin and core layers may all be PVB using the same or different starting resins. Other combinations of resins and polymers will be apparent to those skilled in the art. In general, as used herein "PVB" and "PVB resin" refer to PVnB or PViB or combinations of PVnB and PViB unless otherwise stated.

The soft core layer in a multilayer interlayer can contain one or more resins. When the core layer comprises at least one polyvinyl acetal resin, the resin, or at least one resin, in the soft core layer has at least one of the following characteristics: lower residual hydroxyl; higher residual vinyl acetate content; lower residual hydroxyl content and higher residual acetate content; different aldehyde from the stiff layers; mixed aldehydes; or a combination of any two or more properties. The soft layer typically contains at least one plasticizer, and in some embodiments, a mixture of two or more plasticizers, and in typical embodiments, the soft layer has a higher plasticizer content than the stiffer layer(s). Any combination of layer and interlayer properties may be used as desired and known to one of skill in the art.

In one embodiment, the laminated glass panel of the present disclosure improves sound insulation as measured by sound transmission loss (STL) in the coincident frequency region by up to two (2) decibels (dB) over conventional laminated glass panels having two glass sheets with at least one multilayer acoustic interlayer sandwiched therebetween, wherein the combined glass thickness, the combined stiff layer thickness in the multiple layer acoustic interlayer, and the combined soft layer thickness in the multiple layer interlayer in the conventional glass panels are the same as the combined respective sheet and layer thicknesses of the present disclosure. In another embodiment, the laminated glass panel of the present disclosure improves sound insulation as measured by STL in the coincident frequency region by at least three, or at least four dB over conventional laminated glass panels having two glass sheets with at least one multilayer acoustic interlayer sandwiched therebetween, wherein the combined glass thickness, the combined stiff layer thickness in the multiple layer acoustic interlayer, and the combined soft layer thickness in the multiple layer interlayer in the conventional glass panels are the same as the combined respective sheet and layer thicknesses of the present disclosure.

Suitable poly(vinyl acetal) resins may include residues of any aldehyde and, in some embodiments, may include residues of at least one $C_4$ to $C_8$ aldehyde. Examples of suitable $C_4$ to $C_8$ aldehydes can include, for example, n-butyraldehyde, i-butyraldehyde, 2-methylvaleraldehyde, n-hexyl aldehyde, 2-ethylhexyl aldehyde, n-octyl aldehyde, and combinations thereof. One or more of the poly(vinyl acetal) resins utilized in the layers and interlayers described herein can include at least about 5, at least about 10, at least about 20, at least about 30, at least about 40, at least about 50, at least about 60, or at least about 70 weight percent of residues of at least one $C_4$ to $C_8$ aldehyde, based on the total weight of aldehyde residues of the resin. Alternatively, or in addition, the poly(vinyl acetal) resin may include not more than about 95, not more than about 90, not more than about 85, not more than about 80, not more than about 75, not more than about 70, or not more than about 65 weight percent of at least one $C_4$ to $C_8$ aldehyde. The $C_4$ to $C_8$ aldehyde may be selected from the group listed above, or it can be selected from the group consisting of n-butyraldehyde, i-butyraldehyde, 2-ethylhexyl aldehyde, and combinations thereof. In other embodiments, the poly(vinyl acetal) resin may comprise residues of other aldehydes, including, but not limited to, cinnamaldehyde, hexylcinnamaldehyde, benzaldehyde, hydrocinnamaldehyde, 4-chlorobenzaldehyde, 4-t-butylphenylacetaldehyde, propionaldehyde, 2-phenylpropionaldehyde, and combinations thereof, alone or in combination with one or more of the $C_4$ to $C_8$ aldehydes described herein.

In various embodiments, the poly(vinyl acetal) resin may be a PVB resin that primarily comprises residues of n-butyraldehyde, and may, for example, include any desired amount of residues of an aldehyde other than n-butyraldehyde. Typically, the aldehyde residues other than n-butyraldehyde present in poly(vinyl butyral) resins may include i-butyraldehyde, 2-ethylhexyl aldehyde, and combinations thereof. When the poly(vinyl acetal) resin comprises a poly(vinyl butyral) resin, the weight average molecular weight of the resin can be at least about 30,000, at least about 50,000, at least about 80,000, at least about 100,000, at least about 130,000, at least about 150,000, at least about 175,000, at least about 200,000, at least about 300,000, or at least about 400,000 Daltons, measured by size exclusion chromatography using low angle laser light scattering (SEC/LALLS) method of Cotts and Ouano.

As previously described, poly(vinyl acetal) resins can be produced by hydrolyzing a poly(vinyl acetate) to poly(vinyl alcohol), and then acetalizing the poly(vinyl alcohol) with one or more of the above aldehydes to form a poly(vinyl acetal) resin. In the process of hydrolyzing the poly(vinyl acetate), not all the acetate groups are converted to hydroxyl groups, and, as a result, residual acetate groups remain on the resin. Similarly, in the process of acetalizing the poly(vinyl alcohol), not all of the hydroxyl groups are converted to acetal groups, which also leaves residual hydroxyl groups on the resin. As a result, most poly(vinyl acetal) resins include both residual hydroxyl groups (as vinyl hydroxyl groups) and residual acetate groups (as vinyl acetate groups) as part of the polymer chain. As used herein, the terms "residual hydroxyl content" and "residual acetate content" refer to the amount of hydroxyl and acetate groups, respectively, that remain on a resin after processing is complete. Both the residual hydroxyl content and the residual acetate content are expressed in weight percent, based on the weight of the polymer resin, and are measured according to ASTM D1396.

The poly(vinyl acetal) resins utilized in one or more polymer layers as described herein may have a residual hydroxyl content of at least about 6, at least about 7, at least about 8, at least about 9, at least about 10, at least about 11, at least about 12, at least about 13, at least about 14, at least about 15, at least about 16, at least about 17, at least about 18, at least about 18.5, at least about 19, at least about 20, at least about 21, at least about 22, at least about 23, at least about 24, at least about 25, at least about 26, at least about 27, at least about 28, at least about 29, at least about 30, at least about 31, at least about 32, or at least about 33 weight percent or more. Additionally, or in the alternative, the poly(vinyl acetal) resin or resins utilized in polymer layers of the present disclosure may have a residual hydroxyl content of not more than about 45, not more than about 43, not more than about 40, not more than about 37, not more than about 35, not more than about 34, not more than about 33, not more than about 32, not more than about 31, not more than about 30, not more than about 29, not more than about 28, not more than about 27, not more than about 26, not more than about 25, not more than about 24, not more than about 23, not more than about 22, not more than about 21, not more than about 20, not more than about 19, not more than about 18.5, not more than about 18, not more than about 17, not more than about 16, not more than about 15, not more than about 14, not more than about 13, not more than about 12, not more than about 11, or not more than about 10 weight percent.

In some embodiments, one or more polymer layers can include at least one poly(vinyl acetal) resin having a residual hydroxyl content of at least about 20, at least about 21, at least about 22, at least about 23, at least about 24, at least about 25, at least about 26, at least about 27, at least about 28, at least about 29, or at least about 30 weight percent and/or not more than about 45, not more than about 43, not more than about 40, not more than about 37, not more than about 35, not more than about 34, not more than about 33, or not more than about 32 weight percent. In some embodiments, one or more polymer layers can include at least one poly(vinyl acetal) resin having a residual hydroxyl content of at least about 6, at least about 7, at least about 8, at least about 9, at least about 10, at least about 11, or at least about 12 and/or not more than about 17, not more than about 16, not more than about 15, or not more than about 14 weight percent. When a polymer layer or interlayer includes more than one type of poly(vinyl acetal) resin, each of the poly(vinyl acetal) resins may have substantially the same residual hydroxyl contents, or one or more of the poly(vinyl acetal) resins may have a residual hydroxyl content substantially different from one or more other poly(vinyl acetal) resins.

One or more poly(vinyl acetal) resins used in interlayers according to the present disclosure may have a residual acetate content of not more than about 30, not more than about 25, not more than about 20, not more than about 18, not more than about 15, not more than about 12, not more than about 10, not more than about 8, not more than about 6, not more than about 4, not more than about 3, or not more than about 2 weight percent. Alternatively, or in addition, at least one poly(vinyl acetal) resin used in a polymer layer or interlayer as described herein can have a residual acetate content of at least about 3, at least about 4, at least about 5, at least about 6, at least about 7, at least about 8, at least about 9, at least about 10, at least about 12, or at least about 14 weight percent or more. When a polymer layer or interlayer includes two or more poly(vinyl acetal) resins, the resins may have substantially the same residual acetate content, or one or more resins may have a residual acetate content different from the residual acetate content of one or more other poly(vinyl acetal) resins.

The polymeric resin or resins utilized in polymer layers and interlayers as described herein may comprise one or more thermoplastic polymer resins. In some embodiments, the thermoplastic resin or resins may be present in the polymer layer in an amount of at least about 45, at least about 50, at least about 55, at least about 60, at least about 65, at least about 70, at least about 75, at least about 80, at least about 85, at least about 90, or at least about 95 weight percent, based on the total weight of the resins in the polymer layer. When two or more resins are present, each may be present in an amount of at least about 0.5, at least about 1, at least about 2, at least about 5, at least about 10, at least about 15, at least about 20, at least about 25, at least about 30, at least about 35, at least about 40, at least about 45, or at least about 50 weight percent, based on the total weight of the resins in the polymer layer or interlayer.

One or more polymer layers as described herein may also include at least one plasticizer. When present, the plasticizer content of one or more polymer layers can be at least about 2, at least about 5, at least about 6, at least about 8, at least about 10, at least about 15, at least about 20, at least about 25, at least about 30, at least about 35, at least about 40, at least about 45, at least about 50, at least about 55, at least about 60, at least about 65, at least about 70, at least about 75, or at least about 80 parts per hundred resin (phr) and/or not more than about 120, not more than about 110, not more than about 105, not more than about 100, not more than about 95, not more than about 90, not more than about 85, not more than about 75, not more than about 70, not more than about 65, not more than about 60, not more than about 55, not more than about 50, not more than about 45, not more than about 40, or not more than about 35 phr. In some embodiments, one or more polymer layers can have a plasticizer content of not more than 35, not more than about 32, not more than about 30, not more than about 27, not more than about 26, not more than about 25, not more than about 24, not more than about 23, not more than about 22, not more than about 21, not more than about 20, not more than about 19, not more than about 18, not more than about 17, not more than about 16, not more than about 15, not more than about 14, not more than about 13, not more than about 12, not more than about 11, or not more than about 10 phr.

As used herein, the term "parts per hundred resin" or "phr" refers to the amount of plasticizer present per one hundred parts of resin, on a weight basis. For example, if 30 grams of plasticizer were added to 100 grams of a resin, the plasticizer content would be 30 phr. If the polymer layer includes two or more resins, the weight of plasticizer is compared to the combined amount of all resins present to determine the parts per hundred resin. Further, when the plasticizer content of a layer or interlayer is provided herein, it is provided with reference to the amount of plasticizer in the mix or melt that was used to produce the layer or interlayer, unless otherwise specified.

For layers of unknown plasticizer content, the plasticizer content can be determined via a wet chemical method in which an appropriate solvent, or mixture of solvents, is used to extract the plasticizer from the polymer layer or interlayer. Prior to extracting the plasticizer, the weight of the sample layer is measured and compared with the weight of the layer from which the plasticizer has been removed after extraction. Based on this difference, the weight of plasticizer can be determined and the plasticizer content, in phr, calculated. For multiple layer interlayers, the polymer layers can be physically separated from one another and individually analyzed according to the above procedure.

Although not wishing to be bound by theory, it is understood that, for a given type of plasticizer, the compatibility of the plasticizer in the poly(vinyl acetal) resin may be correlated to the residual hydroxyl content of the resin. More particularly, poly(vinyl acetal) resins having higher residual hydroxyl contents may generally have a reduced plasticizer compatibility or capacity, while poly(vinyl acetal) resins with a lower residual hydroxyl content may exhibit an increased plasticizer compatibility or capacity. Generally, this correlation between the residual hydroxyl content of a polymer and its plasticizer compatibility/capacity can be manipulated in order to facilitate addition of the proper amount of plasticizer to the polymer resin and to stably maintain differences in plasticizer content between multiple layers within an interlayer. Similar correlation may also exist for the compatibility of the plasticizer and residual acetate content in the poly(vinyl acetal) resin.

Any suitable plasticizer can be used in the polymer layers described herein. The plasticizer may have a hydrocarbon segment of at least about 6 and/or not more than about 30, not more than about 25, not more than about 20, not more than about 15, not more than about 12, or not more than about 10 carbon atoms. In various embodiments, the plasticizer is selected from conventional plasticizers or a mixture of two or more conventional plasticizers. In some embodiments, the conventional plasticizer, which generally has refractive index of less than about 1.450, may include, triethylene glycol di-(2-ethylhexanoate) ("3GEH"), triethylene glycol di-(2-ethylbutyrate), tetraethylene glycol di-(2-ethylhexanoate) ("4GEH"), triethylene glycol diheptanoate, tetraethylene glycol diheptanoate, dihexyl adipate, dioctyl adipate, hexyl cyclohexyladipate, diisononyl adipate, heptylnonyl adipate, di(butoxyethyl) adipate, bis(2-(2-butoxyethoxy)ethyl) adipate, dibutyl sebacate, dioctyl sebacate, butyl ricinoleate, castor oil, triethyl glycol ester of coconut oil fatty acids, and oil modified sebacic alkyd resins. In some embodiments, the conventional plasticizer is 3GEH (Refractive index = 1.442 at 25°C).

In some embodiments, other plasticizers known to one skilled in the art may be used, such as a plasticizer with a higher refractive index (i.e., a high refractive index plasticizer). As used herein, a "high refractive index plasticizer" is a plasticizer having a refractive index of at least about 1.460. As used herein, the refractive index (also known as index of refraction) of a plasticizer or a resin is either measured in accordance with ASTM D542 at a wavelength of 589 nm and 25°C or is reported in literature in accordance with ASTM D542. In various embodiments, the refractive index of the plasticizer is at least about 1.460, or greater than about 1.470, or greater than about 1.480, or greater than about 1.490, or greater than about 1.500, or greater than 1.510, or greater than 1.520, for both core and skin layers. In some embodiments, the high refractive index plasticizer(s) is used in conjunction with a conventional plasticizer(s), and in some embodiments, if included, the conventional plasticizer is 3GEH, and the refractive index of the plasticizer mixture is at least 1.460. Examples of suitable high refractive index plasticizers include, but are not limited to, dipropylene glycol dibenzoate, tripropylene glycol dibenzoate, polypropylene glycol dibenzoate, isodecyl benzoate, 2-ethylhexyl benzoate, diethylene glycol benzoate, butoxyethyl benzoate, butoxyethyoxyethyl benzoate, butoxyethoxyethoxyethyl benzoate, propylene glycol dibenzoate, 2,2,4-trimethyl-1,3-pentanediol dibenzoate, 2,2,4-trimethyl-1,3-pentanediol benzoate isobutyrate, 1,3-butanediol dibenzoate, diethylene glycol di-o-toluate, triethylene glycol di-o-toluate, dipropylene glycol di-o-toluate, 1,2-octyl dibenzoate, tri-2-ethylhexyl trimellitate, di-2-ethylhexyl terephthalate, bisphenol A bis(2-ethylhexaonate), di-(butoxyethyl) terephthalate, di-(butoxyethyoxyethyl) terephthalate, dibutoxy ethyl phthalate, diethyl phthalate, dibutyl phthalate, trioctyl phosphate, phenyl ethers of polyethylene oxide rosin derivatives, and tricresyl phosphate, and mixtures thereof. In some embodiments, the plasticizer may comprise, or consist of, a mixture of conventional and high refractive index plasticizers.

Additionally, at least one polymer layer may also include other types of additives that can impart particular properties or features to the polymer layer or interlayer. Such additives can include, but are not limited to, adhesion control agents ("ACAs"), dyes, pigments, stabilizers such as ultraviolet ("UV") stabilizers, antioxidants, anti-blocking agents, flame retardants, IR absorbers or blockers (such as indium tin oxide, antimony tin oxide, lanthanum hexaboride ($LaB_6$) and cesium tungsten oxide), processing aides, flow enhancing additives, lubricants, impact modifiers, nucleating agents, thermal stabilizers, UV absorbers, dispersants, surfactants, chelating agents, coupling agents, adhesives, primers, reinforcement additives, fillers, and refractive index (RI) balancing agent(s). As used herein, the term "refractive index balancing agent" or "RI balancing agent" refers to any component or additive included in the composition, layer, or interlayer for adjusting the refractive index of at least one of the resins or layers. Specific types and amounts of such additives may be selected based on the final properties or end use of a particular interlayer.

Depending on the polymer type and layer composition, the polymer layers described herein may exhibit a wide range of glass transition temperatures. In some embodiments, interlayers including two or more polymers or polymer layers can exhibit two or more glass transition temperatures. The glass transition temperature ($T_g$) of a polymeric material is the temperature that marks the transition of the material from a glassy state to a rubbery state. The glass transition temperatures of the polymer layers described herein were determined by dynamic mechanical thermal analysis (DMTA) according to the following procedure. A polymer sheet is molded into a sample disc of 25 millimeters (mm) in diameter. The polymer sample disc is placed between two 25-mm diameter parallel plate test fixtures of a Rheometrics Dynamic Spectrometer II. The polymer sample disc is tested in shear mode at an oscillation frequency of 1 Hertz as the temperature of the sample is increased from -20 to 70°C or other temperature ranges at a rate of 2°C/minute. The position of the maximum value of tan delta (G"/G') plotted as dependent on temperature is used to determine the glass transition temperature. Experience indicates that the method is reproducible to within +/-1°C.

Interlayers as described herein may include at least one interlayer or polymer layer having a glass transition temperature of at least about -20, at least about -10, at least about -5, at least about -1, at least about 0, at least about 1, at least about 2, at least about 5, at least about 10, at least about 15, at least about 20, at least about 25, at least about 27, at least about 30, at least about 32, at least about 33, at least about 34, at least about 35, at least about 36, at least about 37, at least about 38, or at least about 40°C. Alternatively, or in addition, the polymer layer or interlayer can have a glass transition temperature of not more than about 25, not more than about 20, not more than about 15, not more than about 10, not more than about 5, not more than about 2, not more than about 0, not more than about -1, or not more than about -5°C.

In some embodiments, one or more polymer layers or interlayers may have a glass transition temperature of at least about 30, at least about 32, at least about 33, at least about 35, at least about 36, at least about 37, at least about 38, at least about 39°C, or at least about 40°C and/or not more than about 100, not more than about 90, not more than about 80, not more than about 70, not more than about 60, not more than about 50, not more than about 45, not more than about 44, not more than about 43, not more than about 42, not more than about 41, not more than about 40, not more than about 39, not more than about 38, or not more than about 37°C. Alternatively, or in addition, at least one polymer layer or interlayer may have a glass transition temperature of at least about -10, at least about -5, at least about -2, at least about -1, at least about 0, at least about 1, at least about 2, at least about 5 and/or not more than about 25, not more than about 20, not more than about 15, not more than about 10, not more than about 5, not more than about 2, not more than about 1, not more than about 0, or not more than about -1°C. When a polymer layer or interlayer includes two or more polymer layers, at least one of the layers may have a glass transition temperature different from one or more other polymer layers within the interlayer. Stated differently, when there are two or more layers, each layer may have a different glass transition temperature. In embodiments, the layers or interlayers have a glass transition temperature of less than about 25°C.

In some embodiments, a resin layer or interlayer according to the present disclosure may have a tan delta value at glass transition temperature of at least about 0.50, at least about 0.60, at least about 0.70, at least about 0.80, at least about 0.90, at least about 1.00, at least about 1.10, at least about 1.25, at least about 1.50, at least about 1.75, at least about 2.00, or at least about 2.25, as measured by DMTA.

According to some embodiments of the present disclosure, any of the layers or interlayers may be a single layer, or monolithic, interlayer. In other embodiments, any of the layers or interlayers may be a multiple layer interlayer comprising at least a first polymer layer and a second polymer layer. In some embodiments, the multiple layer interlayer may also include a third polymer layer and the second polymer layer is adjacent to and in contact with each of the first and third polymer layers such that the second polymer layer is sandwiched between the first and third polymer layers. As used herein, the terms "first," "second," "third," and the like are used to describe various elements, but such elements should not be unnecessarily limited by these terms. These terms are only used to distinguish one element from another and do not necessarily imply a specific order or even a specific element. For example, an element may be regarded as a "first" element in the description and a "second" element in the claims without being inconsistent. Consistency is maintained within the description and for each of the independent claims, but such nomenclature is not necessarily intended to be consistent therebetween. Such three-layer (or tri-layer) interlayers may be described as having at least one inner "core" layer sandwiched between two outer "skin" layers.

In some embodiments, each of the polymer layers in an interlayer includes a poly(vinyl acetal) resin. When the interlayer is a multiple layer interlayer, it may include a first polymer layer comprising a first poly(vinyl acetal) resin and a second poly(vinyl acetal) layer comprising a second poly(vinyl acetal) resin. The first and second polymer layers can be adjacent to one another or, optionally, may have one or more intervening polymer layers therebetween.

When present, the first and second poly(vinyl acetal) resins of respective first and second polymer layers can have different compositions. For example, in some embodiments, the first poly(vinyl acetal) resin can have a residual hydroxyl content that is at least about 2, at least about 3, at least about 4, at least about 5, at least about 6, at least about 7, at least about 8, at least about 9, at least about 10, at least about 12, at least about 13, at least about 14, at least about 15, at least about 16, at least about 17, at least about 18, at least about 19, at least about 20, at least about 21, at least about 22, at least about 23, or at least about 24 weight percent different than the residual hydroxyl content of the second poly(vinyl acetal) resin.

Additionally, or in the alternative, the first poly(vinyl acetal) resin can have a residual acetate content that is at least about 2, at least about 3, at least about 4, at least about 5, at least about 6, at least about 7, at least about 8, at least about 9, at least about 10, at least about 12, at least about 13, at least about 15, at least about 18, or at least about 20 weight percent different than the residual acetate content of the second poly(vinyl acetal) resin. In other embodiments, the first poly(vinyl acetal) resin can have a residual acetate content that is not more than about 2, not more than about 1.5, not more than about 1, or not more than about 0.5 weight percent different than the residual acetate content of the second poly(vinyl acetal) resin.

As used herein, the term "weight percent different" or "the difference ... is at least ... weight percent" refers to a difference between two given percentages, calculated by finding the absolute value of the mathematical difference between the two numbers. A value that is "different" from a given value can be higher or lower than the given value. For example, a first poly(vinyl acetal) resin having a residual hydroxyl content that is "at least 2 weight percent different than" the residual hydroxyl content of a second poly(vinyl acetal) resin may have a residual hydroxyl content that is at least 2 weight percent higher or at least 2 weight percent lower than the second residual hydroxyl content. For example, if the residual hydroxyl content of the exemplary second poly(vinyl acetal) resin is 14 weight percent, the residual hydroxyl content of the exemplary first poly(vinyl acetal) resin can be at least 16 weight percent (e.g., at least 2 weight percent higher) or not more than 12 weight percent (e.g., at least 2 weight percent lower).

As a result of having different compositions, the portions of the layer or interlayer formed from the different resins, such as the first poly(vinyl acetal) resin and the second poly(vinyl acetal) resin may have different properties, due to, for example, differences in plasticizer content. As described previously, when two poly(vinyl acetal) resins having different residual hydroxyl contents are blended with a plasticizer, the plasticizer will partition between the different resins, such that a higher amount of plasticizer is present in the layer(s) formed from the lower residual hydroxyl content resin and less plasticizer is present in the portion of the layer(s) including the higher residual hydroxyl content resin. Ultimately, a state of equilibrium is achieved between the two resins. The correlation between the residual hydroxyl content of a poly(vinyl acetal) resin and plasticizer compatibility/capacity can facilitate addition of a proper amount of plasticizer to the polymer resin. Such a correlation also helps to stably maintain the difference in plasticizer content between two or more layers when the plasticizer would otherwise migrate from one layer to the other layer.

When the first and second poly(vinyl acetal) resins have different residual hydroxyl contents and/or have different residual acetate contents, the first and second polymer layers may also include different amounts of plasticizer. As a result, each of these portions may also exhibit different properties, such as, for example, glass transition temperature. In some embodiments, the difference in plasticizer content between adjacent polymer layers can be at least about 2, at least about 5, at least about 8, at least about 10, at least about 12, or at least about 15 phr, measured as described above. In other embodiments, the difference in plasticizer content between adjacent polymer layers can be at least about 18, at least about 20, at least about 25, at least about 30, at least about 35, at least about 40, at least about 45, at least about 50, at least about 55, at least about 60, or at least about 65 phr.

In addition, or in the alternative, the difference between the plasticizer content of adjacent polymer layers may be not more than about 40, not more than about 35, not more than about 30, not more than about 25, not more than about 20, not more than about 17, not more than about 15 or not more than about 12 phr. The values for the plasticizer content of each of the first and second polymer layers may fall within one or more of the ranges provided above.

In some embodiments, the glass transition temperature of the first polymer layer can be at least about 3, at least about 5, at least about 8, at least about 10, at least about 12, at least about 13, at least about 15, at least about 18, at least about 20, at least about 22, at least about 25, at least about 30, at least about 35, or at least about 40°C different than the glass transition temperature of the second polymer layer. The values for the glass transition temperatures of each of the first and second polymer layers may fall within one or more of the ranges provided above.

When the multiple layer interlayer includes three or more polymer layers, each of the respective first, second, and third (or more) polymer layers can include at least one poly(vinyl acetal) resin and an optional plasticizer(s) of the types and in the amounts described in detail previously. According to some embodiments, the second (inner) polymer layer can include a resin having a residual hydroxyl content lower than the residual hydroxyl contents of the poly(vinyl acetal) resins in each of the first and third (outer) polymer layers. Consequently, as the plasticizer partitions between the layers, the inner layer may have a glass transition temperature lower than the glass transition temperature of each of the outer polymer layers. Although not wishing to be bound by theory, it is understood that this type of configuration, wherein relatively "stiff" (i.e., higher glass transition temperature) outer polymer layers are sandwiching a "soft" (i.e., relatively low glass transition temperature) inner layer, may facilitate enhanced acoustic performance from the interlayer. Alternatively, in other embodiments, the stiff layer is present as an inner layer and sandwiched by two soft outer layers, creating a multilayer interlayer of soft/stiff/soft configuration. Other embodiments having additional layers and/or configurations are also possible, such as interlayers having four, five, six, seven or more layers.

In some embodiments, two (or more) layers, such as the outer polymer layers, can have the same or similar compositions and/or properties. For example, in some embodiments, the poly(vinyl acetal) resin in the first polymer layer can have a residual hydroxyl content within about 2, within about 1, or within about 0.5 weight percent of the residual hydroxyl content of the poly(vinyl acetal) resin in the third polymer layer. Similarly, the poly(vinyl acetal) resins in the first and third layer can have residual acetate contents within about 2, within about 1, or within about 0.5 weight percent of one another. Additionally, the first and third outer polymer layers may have the same or similar plasticizer contents and/or may exhibit the same or similar glass transition temperatures. For example, the plasticizer content of the first polymer layer can be less than 2, not more than about 1, or not more than about 0.5 phr different than the plasticizer content of the third polymer layer, and/or the first and third polymer layers can have glass transition temperatures that differ by less than 2, not more than about 1, or not more than about 0.5°C.

In various embodiments, the differences in residual hydroxyl and/or residual acetate content of the first and second poly(vinyl acetal) resins can be selected to control or provide certain performance properties, such as strength, impact resistance, penetration resistance, processability, or acoustic performance to the final composition, layer, or interlayer. For example, poly(vinyl acetal) resins having a higher residual hydroxyl content, usually greater than about 17 weight percent, can facilitate high impact resistance, penetration resistance, and strength to a resin composition or layer, while lower hydroxyl content resins, usually having a residual hydroxyl content of less than 17 weight percent, can improve the acoustic performance of the interlayer.

The interlayers of the present disclosure can be formed according to any suitable method. Exemplary methods can include, but are not limited to, solution casting, compression molding, injection molding, melt extrusion, melt blowing, and combinations thereof. Multilayer interlayers including two or more polymer layers may also be produced according to any suitable method such as, for example, co-extrusion, blown film, melt blowing, dip coating, solution coating, blade, paddle, air-knife, printing, powder coating, spray coating, lamination, and combinations thereof.

According to various embodiments of the present disclosure, the layers or interlayers may be formed by extrusion or co-extrusion. In an extrusion process, one or more thermoplastic resins, plasticizers, and, optionally, one or more additives as described previously, can be pre-mixed and fed into an extrusion device(s). The extrusion device(s) is configured to impart a particular profile shape to the thermoplastic composition in order to create an extruded sheet. The extruded sheet, which is at an elevated temperature and highly viscous throughout, can then be cooled to form a polymeric sheet. Once the sheet has been cooled and set, it may be cut and rolled for subsequent storage, transportation, and/or use as an interlayer.

Co-extrusion is a process by which multiple layers of polymer material are extruded simultaneously. Generally, this type of extrusion utilizes two or more extruders to melt and deliver a steady volume throughput of different thermoplastic melts of different viscosities or other properties through a co-extrusion die into the desired final form. The thickness of the multiple polymer layers leaving the extrusion die in the co-extrusion process can generally be controlled by adjustment of the relative speeds of the melt through the extrusion die and by the sizes of the individual extruders processing each molten thermoplastic resin material.

The overall average thickness of interlayers according to various embodiments of the present disclosure can be at least about 10, at least about 15, at least about 20, at least about 25, at least about 30, or at least about 35 mils and/or not more than about 120, not more than about 90, not more than about 75, not more than about 60, not more than about 50, not more than about 45, not more than about 40, not more than about 35, not more than about 32 mils. Other thicknesses may be used as desired for a particular application. If the interlayer is not laminated between two substrates, its average thickness can be determined by directly measuring the thickness of the interlayer using a caliper, or other equivalent device. If the interlayer is laminated between two substrates, its thickness can be determined by subtracting the combined thickness of the substrates from the total thickness of the multiple layer panel.

In some embodiments, one or more polymer layers can have an average thickness of at least about 1, at least about 2, at least about 3, at least about 4, at least about 5, at least about 6, at least about 7, at least about 8, at least about 9, or at least about 10 mils. Additionally, or in the alternative, one or more of the polymer layers in an interlayer as described herein can have an average thickness of not more than about 25, not more than about 20, not more than about 15, not more than about 12, not more than about 10, not more than about 8, not more than about 6, or not more than about 5 mils.

In some embodiments, the resin layers or interlayers can comprise flat polymer layers having substantially the same thickness along the length, or longest dimension, and/or width, or second longest dimension, of the sheet, while, in other embodiments, one or more layers of a multilayer interlayer, for example, can be wedge-shaped or can have a wedge-shaped profile, such that the thickness of the interlayer changes along the length and/or width of the sheet, such that one edge of the layer or interlayer has a thickness greater than the other. When the interlayer is a multilayer interlayer, at least one, at least two, or at least three or more of the layers of the interlayer can be wedge-shaped. When the interlayer is a monolithic interlayer, the polymer sheet can be flat or wedge shaped. Wedge-shaped interlayers may be useful in, for example, heads-up-display (HUD) panels in automotive and aircraft applications.

According to some embodiments, multiple layer panels of the present disclosure exhibit desirable acoustic properties, as indicated by, for example, the reduction in the transmission of sound as it passes through (i.e., the sound transmission loss of) the interlayer. In some embodiments, multiple layer panels of the present disclosure may exhibit a sound transmission loss at the coincident frequency, measured according to ASTM E90 at 20°C and panel dimensions of 50 cm by 80 cm, of at least about 34, at least about 35, at least about 36, at least about 37, at least about 38, at least about 39, at least about 40, at least about 41, or at least about 42 dB.

Additionally, the layers and interlayers can have a damping loss factor, or loss factor, of at least about 0.10, at least about 0.12, at least about 0.15, at least about 0.17, at least about 0.20, at least about 0.25, at least about 0.27, at least about 0.30, at least about 0.33, or at least about 0.35 at 20°C. Loss factor is measured by Mechanical Impedance Measurement as described in ISO Standard 16940. To measure damping loss factor, a polymer sample is laminated between two sheets of clear glass, each having a thickness of 2.3 mm, and is prepared to have a width of 25 mm and a length of 300 mm. The laminated sample is then excited at the center point using a vibration shaker (commercially available from Brüel and Kjaer (Nærum, Netherlands)) and an impedance head (Brüel and Kjaer) is used to measure the force required to excite the bar to vibrate and the velocity of the vibration. The resultant transfer function is recorded on a National Instrument data acquisition and analysis system and the loss factor at the first vibration mode is calculated using the half power method.

Multiple layer panels as described herein may be formed by any suitable method. The typical glass lamination process comprises the following steps: (1) assembly of the three (or more) substrates and the interlayers; (2) heating the assembly via an IR radiant or convective device for a first, short period of time; (3) passing the assembly into a pressure nip roll for the first de-airing; (4) heating the assembly for a short period of time to an appropriate temperature (such as about 60°C to about 120°C) to give the assembly enough temporary adhesion to seal the edge of the interlayer; (5) passing the assembly into a second pressure nip roll to further seal the edge of the interlayer and allow further handling; and (6) autoclaving the assembly at an appropriate temperature (such as between 135°C and 150°C) and appropriate pressure (such as between 150 psig and 200 psig) for about 30 to 90 minutes. Other methods for de-airing the interlayer-glass interface, as described according to one embodiment in steps (2) through (5) above include vacuum bag and vacuum ring processes, and both may also be used to form interlayers of the present disclosure as described herein.

The multiple layer panels of the present disclosure can be used for a variety of end use applications, including, for example, for automotive windshields and windows, aircraft windshields and windows, panels for various transportation applications such as marine applications, rail applications, etc., structural architectural panels such as windows, doors, stairs, walkways, balusters, decorative architectural panels, weather-resistant panels, such as hurricane glass or tornado glass, ballistic panels, and other similar applications.

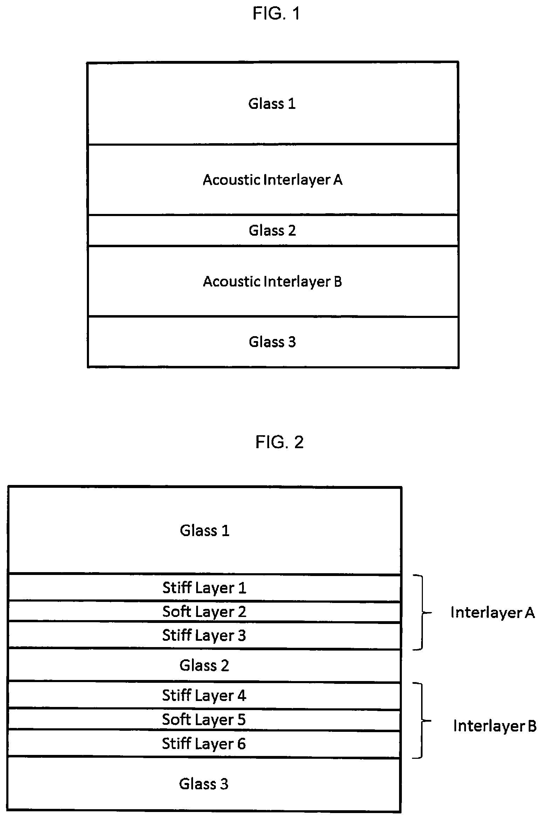

The Figures show examples of multiple layer glass panels of the disclosure, as well as conventional or comparative multiple layer glass panels. FIG. 1 is a general example of the present disclosure showing a multiple layer glass panel having three glass layers (Glass 1, Glass 2 and Glass 3) with two acoustic interlayers (Acoustic Interlayer A and Acoustic Interlayer B) between the panels.

FIG. 2 shows a more detailed view of the multiple layer glass panel of FIG. 1. The glass panel consists of a first glass (Glass 1), a second glass (Glass 2), and a third glass (Glass 3), a first acoustic tri-layer interlayer (Interlayer A, having two stiff outer layers and a soft inner layer) between the first (Glass 1) and second (Glass 2) glass sheets, and a second tri-layer acoustic interlayer (Interlayer B, having two stiff outer layers and a soft inner layer) between the second (Glass 2) and third (Glass 3) glass sheets.

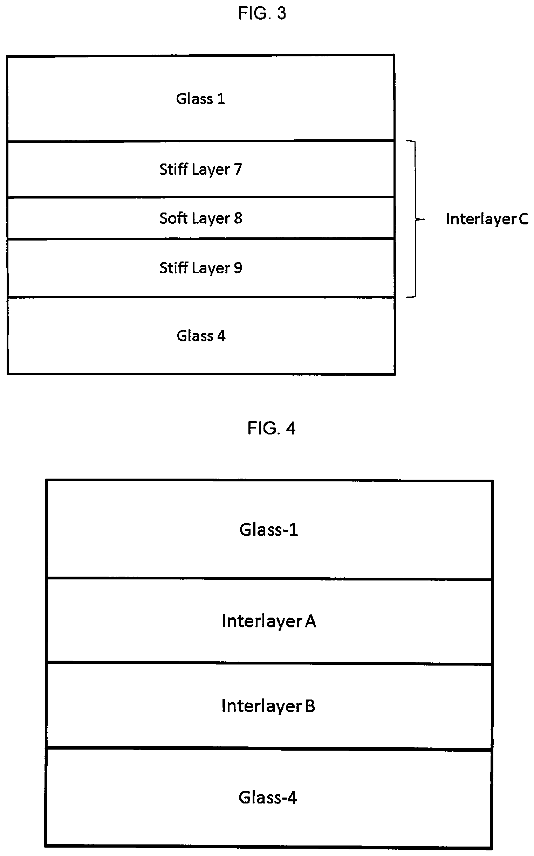

FIG. 3 shows a comparative conventional multiple layer glass panel having a first glass sheet (Glass 1), a second glass sheet (Glass 4), and an acoustic tri-layer interlayer (Interlayer C, having two stiff outer layers and a soft inner layer) disposed between the first (Glass 1) and second (Glass 4) glass sheets. In the glass panel of FIG. 3, the combined glass thickness of the glass panel (Glass 1 + Glass 4) is equal to the combined glass thicknesses (Glass 1 + Glass 2 + Glass 3) of the glass panel in FIG. 2. Also, the combined stiff layer thicknesses (Stiff Layer 7 + Stiff Layer 9) and soft layer thickness (Soft Layer 8) in the glass panel of FIG. 3 are the same as the respective combined thicknesses in the glass panel in FIG. 2 (Stiff Layer 1 + Stiff Layer 3 + Stiff Layer 4 + Stiff Layer 6 = Stiff Layer 7 + Stiff Layer 9 and Soft Layer 2 + Soft Layer 5 = Soft Layer 8).

FIG. 4 shows another embodiment of a comparative multiple layer glass consisting of only two glass sheets with two interlayers disposed between the glass sheets. Specifically, the glass panel of FIG. 4 has a first glass sheet (Glass 1), a second glass sheet (Glass 4), a first acoustic multilayer interlayer (Interlayer A, having two stiff outer layers and a soft inner layer) and a second acoustic interlayer (Interlayer B, having two stiff outer layers and a soft inner layer), wherein the combined glass thickness of the glass layers (Glass 1 + Glass 4) in the glass panel of FIG. 4 equals the combined glass thickness of the glass layers (Glass 1 + Glass 2 + Glass 3) in the glass panel of FIG. 2, and the interlayers, Interlayer A and Interlayer B, are the same as the interlayers in the glass panel of FIG. 2 (having the same stiff layer thicknesses and soft layer thicknesses and combined thicknesses as those in the interlayers of the respective layers in the glass panel shown in FIG. 2).

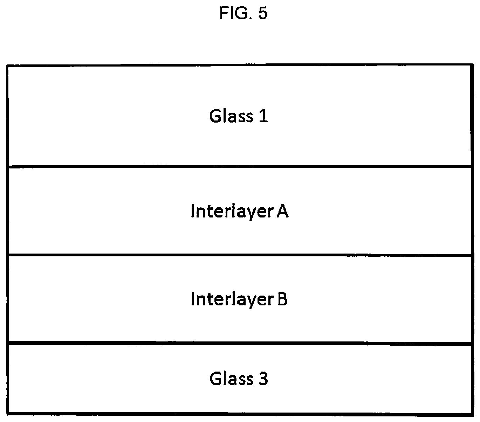

FIG. 5 shows another embodiment of a comparative multiple layer glass panel consisting of a first glass sheet (Glass 1), a second glass sheet (Glass 3), a first acoustic interlayer (Interlayer A) and a second acoustic interlayer (Interlayer B), wherein the combined glass thickness of the glass sheets (Glass 1 + Glass 3) in the glass panel of FIG. 5 is less than the combined glass thickness of the glass sheets (Glass 1 + Glass 2 + Glass 3) of the glass panel of FIG. 2. The interlayers (Interlayer A and Interlayer B and the combined stiff layer thicknesses and soft layer thicknesses of Interlayer A and Interlayer B) are the same as those in the interlayers in the glass panel of FIG. 2. Other embodiments of interlayer and glass sheet combinations are also possible.

The following examples are intended to be illustrative of the present disclosure in order to teach one of ordinary skill in the art to make and use the disclosure and are not intended to limit the scope of the disclosure in any way.

## EXAMPLES

The following Examples describe the preparation of multiple layer glass panels. As described below, several tests performed on the glass panels were used to evaluate the acoustic properties of several comparative and disclosed multiple layer glass panels.

### Example 1: Three or More Glass Sheets and Two or More Acoustic Interlayer Sheets

Table 1 summarizes the properties of interlayer compositions I-1, I-2 and I-3. Interlayers I-1 and I-2 are each tri-layer acoustic interlayers having one soft core layer having a glass transition temperature of 0°C and two stiff skin layers having a glass transition temperature of 30°C, and damping loss factor of 0.26 and 0.32, respectively. Interlayer I-3 is a monolithic acoustic interlayer having a glass transition temperature of 17°C and a damping loss factor of 0.20. These interlayers were used for constructing the multiple layer glass panels shown in Table 2.

**Table 1: Acoustic (Stiff/Soft/Stiff) Tri-layer Interlayer and Acoustic (Soft) Monolithic Interlayer Compositions**

| Interlayer No. | I-1 | I-2 | I-3 |
|---|---|---|---|
| Stiff layer residual hydroxyl content, wt.% | 19 | 19 | - |
| Stiff layer plasticizer content, phr | 38 | 38 | - |
| Combined stiff layer thickness, mil | 16.5 | 33 | - |
| Soft layer residual hydroxyl content, wt.% | 11 | 11 | 16 |
| Soft layer plasticizer content, phr | 75 | 75 | 52 |
| Soft layer thickness, mil | 3.5 | 7 | 30 |
| Interlayer thickness, mil | 20 | 40 | 30 |
| Glass transition temperature, °C | 0 (soft layer) 30 (stiff layer) | 0 (soft layer) 30 (stiff layer) | 17 |
| Damping loss factor at 20°C | 0.26 | 0.32 | 0.20 |

Multiple layer glass panels were produced by laminating glass sheets and the acoustic interlayers of Table 1 (I-1, I-2, and I-3). Six comparative and four disclosed glass panels were produced as described below and as shown in FIGs. 1 to 5.

Comparative glass panel C-1 consisted of two glass sheets and an acoustic interlayer, specifically a first glass sheet 2.3 mm thick (Glass 1), a second glass sheet 2.3 mm thick (Glass 4), and an acoustic tri-layer interlayer 40 mils thick (I-2) between the first and second glass sheets, where the combined glass thickness (Glass 1 + Glass 4) was 4.6 mm. As shown in Table 1, interlayer I-2 had a combined stiff (skin) layer thickness of 33 mils, and a soft layer thickness of 7 mils.

Comparative glass panel C-2 consisted of consisted of two glass sheets and two acoustic interlayers between the glass, specifically a first glass sheet 2.3 mm thick (Glass 1), a second glass sheet 2.3 mm thick (Glass 4), and two layers of acoustic tri-layer interlayers (I-1) that were laminated together to create a five layer interlayer having three stiff layers and two soft layers. (As an alternative, the five layer interlayer could be created from the tri-layer interlayer (I-2) by removing half of each of the stiff (skin) layers and inserting them in the center of the soft (core) layer.) The resulting five layer interlayer had a total thickness of 40 mils with a combined stiff layer thickness of 33 mils and soft layer thickness of 7 mils (identical to the combined thicknesses of those in interlayer I-2 used for comparative glass panel C-1) and was laminated between two glass sheets. The glass panel had a combined glass thickness (Glass 1 + Glass 4) of 4.6 mm (the same as the glass thickness in comparative glass panel C-1).

Comparative glass panel C-3 consisted of consisted of two glass sheets and two acoustic interlayers, specifically a first glass sheet 2.3 mm thick (Glass 1), a second glass sheet 1.6 mm thick (Glass 3), and two acoustic tri-layer interlayers (I-1) laminated together to create a five layer interlayer (as previously described) laminated between the two layers of glass. The combined glass thickness (Glass 1 + Glass 3) of comparative panel C-3 was 3.9 mm, 0.7 mm less than the combined glass thickness of comparative glass panels C-1 and C-2.

Comparative glass panel C-4 consisted of consisted of two glass sheets and an acoustic interlayer, specifically a first glass sheet 2.3 mm thick (Glass 1), a second glass sheet 1.6 mm thick (Glass 3), and an acoustic tri-layer interlayer 40 mils thick (I-2) between the glass sheets, where the combined glass thickness (Glass 1 + Glass 3) equaled 3.9 mm (the same as the glass thickness in comparative glass panel C-3).

Comparative glass panel C-5 consisted of consisted of two glass sheets and two acoustic interlayers, specifically a first glass sheet 1.6 mm thick (Glass 1), a second glass sheet 1.6 mm thick (Glass 3), and two acoustic tri-layer interlayers (I-1) laminated together (to create a five layer interlayer as previously described) that was laminated between the two glass sheets. The combined glass thickness (Glass 1 + Glass 3) equaled 3.2 mm (0.7 mm less than the combined glass thickness of comparative glass panels C-3 and C-4) and 1.4 mm less than the combined glass thickness of comparative glass panels C-1 and C-2.

Comparative glass panel C-6 consisted of consisted of two glass sheets and two acoustic interlayers, specifically a first glass sheet 2.3 mm thick (Glass 1), a second glass sheet 2.3 mm thick (Glass 4), and two acoustic monolithic interlayers (I-3) of 30 mils thick laminated together to create a 60-mil thick acoustic monolithic interlayer that was laminated between the two glass sheets. The glass panel had a combined glass thickness (Glass 1 + Glass 4) of 4.6 mm, equal to that of comparative panels C-1 and C-2.

Disclosed glass panel D-1 consisted of three glass sheets and two acoustic interlayers, specifically a first glass sheet 2.3 mm thick (Glass 1), a second glass sheet 0.7 mm thick (Glass 2), a third glass sheet 1.6 mm thick (Glass 3), and two tri-layer acoustic interlayers each 20 mils thick (I-1) (each having two stiff layers (combined thickness of 16.5 mils) and a core layer 3.5 mils thick, as shown in Table 1). The multiple layer glass panel was produced by laminating one interlayer between Glass 1 and Glass 2, and one interlayer between Glass 2 and Glass 3. The combined glass thickness of disclosed panel D-1 (Glass 1 + Glass 2 + Glass 3) was 4.6 mm (the same combined glass thickness of comparative glass panels C-1 and C-2). The combined stiff layer thickness of the two interlayers in disclosed glass panel D-1 was 33 mils, and the combined soft layer thickness was 7 mils, which was identical to those in comparative glass panels C-1, C-2, and C-3. The combined surface glass thickness (Glass 1 + Glass 3) was 3.9 mm, equal to that in comparative glass panel C-3 and 0.7 mm thinner than that in comparative glass panels C-1 and C-2.

Disclosed glass panel D-2 consisted of three glass sheets and two acoustic interlayers, specifically a first glass sheet 1.6 mm thick (Glass 1), a second glass sheet 2.3 mm thick (Glass 2), a third glass sheet 0.7 mm thick (Glass 3), and two tri-layer acoustic interlayers each 20 mils thick (I-1) laminated in the same manner as disclosed panel D-1. The multiple layer glass panel was produced by laminating one interlayer between Glass 1 and Glass 2, and one interlayer between Glass 2 and Glass 3. The combined glass thickness of panel D-2 (Glass 1 + Glass 2 + Glass 3) was 4.6 mm (the same combined glass thickness of comparative glass panels C-1 and C-2, and disclosed panel D-1). The combined stiff and soft layer thicknesses of disclosed panel D-2 was identical to those in comparative glass panels C-1, C-2, and C-3.

Disclosed glass panel D-3 consisted of three glass sheets and two acoustic interlayers, specifically a first glass sheet 1.6 mm thick (Glass 1), a second glass sheet 0.7 mm thick (Glass 2), a third glass sheet 1.6 mm thick (Glass 3), and two tri-layer acoustic interlayers each 20 mils thick (I-1) laminated in the same manner as disclosed glass panel D-1. The combined glass thickness of the glass panel (Glass 1 + Glass 2 + Glass 3) was 3.9 mm (the same combined glass thickness of comparative glass panels C-3 and C-4). The combined stiff and soft layer thicknesses of the two interlayers in disclosed glass panel D-3 was identical to those in comparative glass panels C-3, C-4 and C-5. The combined surface, or outer, glass thickness (Glass 1 + Glass 3) was 3.2 mm, equal to that of comparative glass panel C-5 and 0.7 mm thinner than that in comparative glass panels C-3 and C-4.

Disclosed glass panel D-4 consisted of three glass sheets and two acoustic interlayers, specifically a first glass sheet 2.3 mm thick (Glass 1), a second glass sheet 0.7 mm thick (Glass 2), a third glass sheet 1.6 mm thick (Glass 3), and two monolithic acoustic interlayers each 30 mils thick (I-3). The multiple layer glass panel was produced by laminating one monolithic interlayer between Glass 1 and Glass 2, and one monolithic interlayer between Glass 2 and Glass 3. The combined glass thickness of disclosed panel D-4 (Glass 1 + Glass 2 + Glass 3) was 4.6 mm (the same combined glass thickness of comparative glass panel C-6). The combined thickness of the two interlayers in disclosed panel D-4 was 60 mils, the same as that in comparative glass panel C-6.

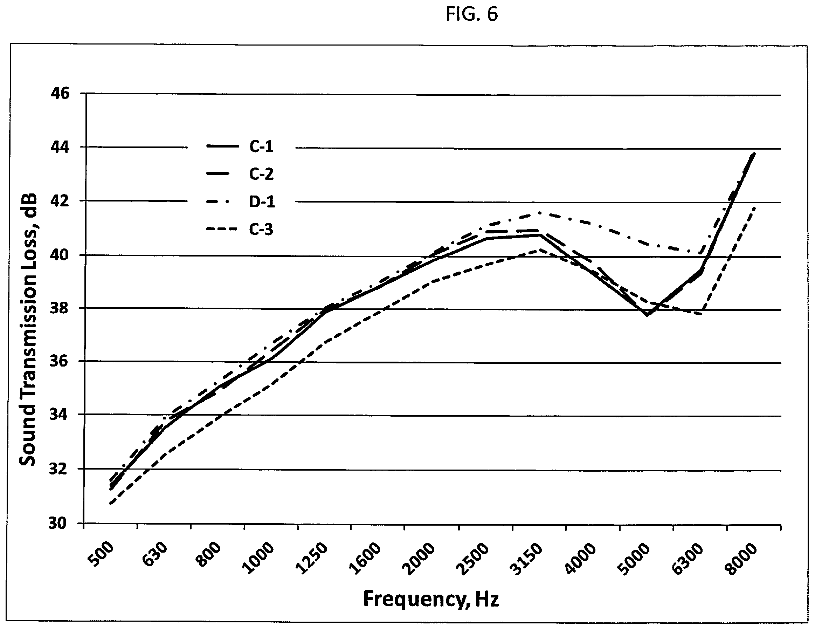

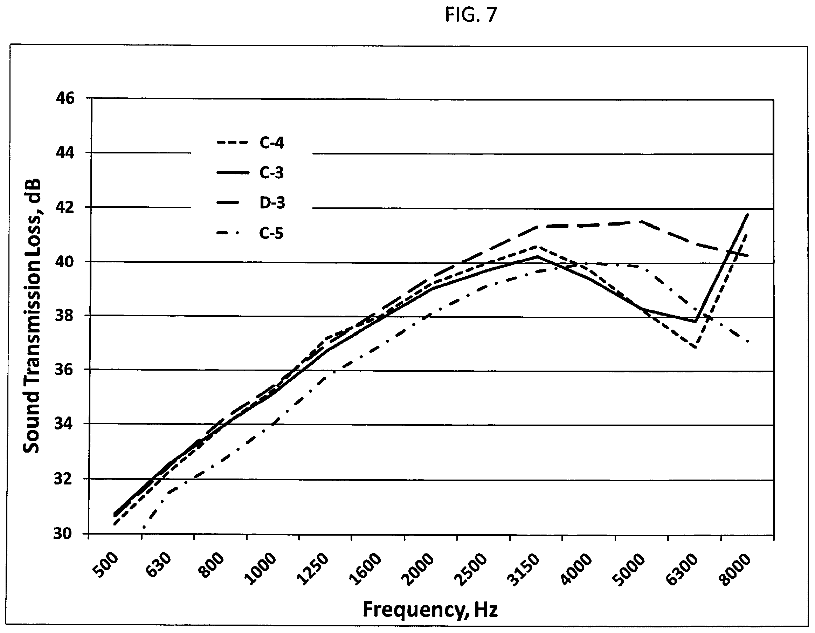

Coincident frequency and sound transmission loss at coincident frequency from STL measurement of comparative glass panels C-1 through C-6 and disclosed glass panels D-1 through D-4 are summarized in Table 2. Plots in the 500 to 8000 third-octave band frequency region are shown in FIG. 6 for glass panels C-1, C-2, C-3, and D-1 and in FIG. 7 for glass panels C-3, C-4, C-5 and D-3. Details of the panels are also summarized in Table 2 below.

**Table 2: Glass Panel Constructions and Sound Insulation Properties**

| Glass Panel No. | C-1 | C-2 | D-1 | D-2 | C-3 | C-4 | D-3 | C-5 | C-6 | D-4 |
|---|---|---|---|---|---|---|---|---|---|---|
| Glass 1 Thickness (mm) | 2.3 | 2.3 | 2.3 | 1.6 | 2.3 | 2.3 | 1.6 | 1.6 | 2.3 | 2.3 |
| 1st Interlayer | I-2 | I-1 | I-1 | I-1 | I-1 | I-2 | I-1 | I-1 | I-3 | I-3 |
| Glass 2 Thickness (mm) | - | - | 0.7 | 2.3 | - | - | 0.7 | - | - | 0.7 |
| 2nd Interlayer | - | I-1 | I-1 | I-1 | I-1 | - | I-1 | I-1 | I-3 | I-3 |
| Glass 3 Thickness (mm) | - | - | 1.6 | 0.7 | 1.6 | 1.6 | 1.6 | 1.6 | - | 1.6 |
| Glass 4 Thickness (mm) | 2.3 | 2.3 | - | - | - | - | - | - | 2.3 | - |
| Total No. of glass sheets | 2 | 2 | 3 | 3 | 2 | 2 | 3 | 2 | 2 | 3 |
| Total No. of acoustic interlayers | 1 | 2 | 2 | 2 | 2 | 1 | 2 | 2 | 2 | 2 |
| Combined stiff layer thickness (mils) | 33 | 33 | 33 | 33 | 33 | 33 | 33 | 33 | - | - |
| Combined soft layer thickness (mils) | 7 | 7 | 7 | 7 | 7 | 7 | 7 | 7 | 60 | 60 |
| Combined glass thickness (mm) | 4.6 | 4.6 | 4.6 | 4.6 | 3.9 | 3.9 | 3.9 | 3.2 | 4.6 | 4.6 |
| Coincident frequency (Hz) | 500 0 | 500 0 | 630 0 | 500 0 | 630 0 | 630 0 | 800 0 | 800 0 | 500 0 | 630 0 |
| STL at coincident frequency (dB) | 37.8 | 37.8 | 40.2 | 40.3 | 37.8 | 36.9 | 40.3 | 37.1 | 36.7 | 38.9 |

As shown in FIG. 6, in the range of about 500 Hz to about 2000 Hz the transmission loss of all four of the glass panels increases as the frequency increases. Because of the presence of the acoustic interlayer, these panels exhibited sound transmission loss extending the mass controlled region to a higher frequency of about 2000 Hz from the typical frequency of about 1000 Hz for non-acoustic laminated glass panel of the same combined glass thickness. The panels also increased the STL in the range of about 500 to about 2000 Hz. As shown in FIG. 6, glass panels C-1, C-2 and D-1 all had about the same STL in the range of 500 to 2000 Hz. These glass panels all had the same combined glass thickness and interlayer thickness (the same overall mass), although disclosed glass panel D-1 had three glass sheets with one sheet of glass (0.7 mm) between two acoustic interlayers instead of only two (outer or surface) glass sheets in the panel, like comparative glass panels C-1, C-2 and C-3. In the coincident frequency region, comparative panels C-1 and C-2 had about the same STL as the frequency increased above the mass controlled region (above about 2000 Hz), and the interlayer constructions, tri-layer or five-layer, had little effect on the sound insulation as shown by the STL at the coincident frequency (37.8 for both comparative panels C-1 and C-2). Both comparative panels C-1 and C-2 exhibited a coincident frequency at 5000 Hz. Disclosed glass panel D-1 shifted the coincident frequency to 6300 Hz and improved the sound insulation in the coincident frequency region by over 2 dB. Comparative glass panel C-3 also had a coincident frequency at 6300 Hz (the same as that of disclosed panel D-1), but the sound insulation in the coincident frequency (STL) is lower than disclosed panel D-1 and is the same as that of comparative panels C-1 and C-2. The lower STL of comparative panel C-3 is expected because using the same interlayer type with changing glass thicknesses has little effect on STL at the coincident frequency of the panel, as shown. However, the lighter and thinner glass panel, C-3, had lower transmission loss (about 1 dB less) in the frequency range of 500 to 2000 Hz than comparative panels C-1 and C-2.

As shown in Table 2 and FIG. 6, disclosed glass panel, D-1, which contained three glass sheets and two acoustic interlayers and had a combined glass thickness equal to that of comparative glass panels C-1 and C-2, improved sound insulation (or increased STL) in the coincident frequency region by more than 2 dB compared to comparative glass panels C-1 and C-2. Disclosed glass panel D-1 further shifted the coincident frequency from 5000 Hz (for C-1 and C-2) to 6300 Hz, a coincident frequency that is the same as the coincident frequency of the thinner and lighter comparative glass panel, C-3. While improving the sound insulation, disclosed glass panel D-1 also maintained transmission loss in the mass controlled frequency region of 500 to 2000 Hz (which is essentially the same as that of comparative glass panels C-1 and C-2).

Disclosed glass panel D-2, which also contained three glass sheets and two acoustic interlayers (with a combined glass thickness also equal to that of comparative glass panels C-1 and C-2), also improved sound insulation (or increased STL) in the coincident frequency region by more than 2 dB over comparative glass panels C-1 and C-2. Unlike disclosed glass panel D-1, disclosed glass panel D-2 maintained the coincident frequency at 5000 Hz, which is the same as the coincident frequency of comparative glass panels C-1 and C-2.

As shown in Table 2 and FIG. 6, removing a portion of the glass from one of the two outer or surface glass sheets (such as comparative glass panel C-2) and inserting it between the two acoustic interlayers to create new glass panels having three glass sheets but the same overall thickness and mass (as illustrated by disclosed panels D-1 and D-2) did not affect the surface density of the glass panel and static stiffness but altered the bending stiffness in the coincident frequency region. As a result, modifying a comparative glass panel (such as comparative panel C-2 by removing a portion of the glass in one outer sheet) to create disclosed glass panels D-1 and D-2 (by relocating a portion of the surface glass thickness to the interior of the panel (between the two interlayers) improved the sound insulation property in the coincident frequency region by over 2 dB.

FIG. 7 plots sound transmission loss in the 500 to 8000 third-octave band frequency region for comparative glass panels C-3, C-4 and C-5 and disclosed panel D-3. As shown in FIG. 7, these panels had combined glass thicknesses less than the thicknesses of glass panels C-1, C-2, and D-1. In the range of about 500 Hz to about 2500 Hz, the transmission loss of all four glass panels (C-3, C-4, C-5 and D-3) increased as the frequency increased. Because of the presence of the acoustic interlayer, these panels exhibited sound transmission loss extending the mass controlled region to a higher frequency of about 2500 Hz from the typical frequency of about 1500 Hz for non-acoustic laminated glass panels of the same combined glass thickness. The panels also increased the STL in the range of about 500 to about 2500 Hz. As shown in FIG. 7, glass panels C-3, C-4 and D-3 all had similar STL values in the range of 500 to 2500 Hz. These glass panels all had the same combined glass thickness and interlayer thickness (the same overall mass), although disclosed glass panel D-3 had three glass sheets with one sheet of glass (0.7 mm) between the two acoustic interlayers instead of having the total glass thickness only in the outer or surface glass layers of the panel. In the coincident frequency region, comparative panels C-3 and C-4 had about the same STL as the frequency increased above the mass controlled region (above about 2500 Hz), and the interlayer construction (whether tri-layer or five-layer) had little effect on the sound insulation. Both comparative panels C-3 and C-4 exhibited coincident frequency at 6300 Hz. Disclosed glass panel D-3 shifted the coincident frequency to 8000 Hz and improved the sound insulation in the coincident frequency region by more than 3 dB. Comparative glass panel C-5 had a coincident frequency at 8000 Hz (the same as that of disclosed panel D-3), but the sound insulation at the coincident frequency was lower and comparable to that of comparative panels C-3 and C-4. In addition, the lighter and thinner glass panel, C-5, had lower STL (about 1 dB less) in the frequency range of 500 to 2500 Hz.

Disclosed glass panel D-3 further shifted the coincident frequency from 6300 Hz (for comparative panels C-3 and C-4) to 8000 Hz (the same as the coincident frequency of the thinner and lighter comparative glass panel, C-5). While improving the sound insulation, disclosed glass panel D-3 also maintained transmission loss in the mass controlled frequency region of 500 to 2500 Hz (which is essentially the same as that of comparative glass panels C-3 and C-4). Stated differently, removing a portion of the glass thickness from one of two outer or surface glass sheets (such as from comparative glass panel C-3) and inserting it between the two acoustic interlayers to create a new glass panel having three glass sheets (as illustrated by disclosed panel D-3) did not affect the surface density of the glass panel and static stiffness but altered the bending stiffness in the coincident frequency region. As a result, modifying a panel such as comparative glass panel C-3 (by removing a portion of the glass in one of the surface sheets) to create disclosed glass panel D-3 improved the sound insulation property in the coincident frequency region and shifted the coincident frequency to the higher and less important frequency region.

As shown in Table 2, disclosed glass panel, D-4, which contained three glass sheets and two acoustic interlayers (with a combined glass thickness equal to that of comparative glass panel C-6), improved sound insulation or increased sound transmission loss in the coincident frequency region by more than 2 dB over comparative glass panel C-6. Disclosed glass panel D-4 further shifted the coincident frequency from 5000 Hz (for C-6) to 6300 Hz.

The disclosed glass panels in Table 1 (D-1, D-2, D-3, and D-4) can be considered to have three constrained layer systems. For example, the three constrained layer systems for disclosed panel D-1 are: 1) **Glass 1** (2.3 mm)//Interlayer **(I-1)//Glass 2** (0.7 mm); 2) **Glass 2** (0.7 mm//Interlayer (I-**1)//Glass** 3 (1.6 mm); and 3) **Glass 1** (2.3 mm)//Interlayer (I-1)//Glass-2 (0.7 mm)//Interlayer **(I-1)//Glass** 3 (1.6 mm). This is different from comparative and conventional glass panels (such as comparative glass panels C-1 through C-6) which have only one constrained layer: Glass//Interlayer//-Glass. As used herein, a "constrained layer system" is a system consisting of two rigid substrates and a viscoelastic or polymeric material (such as a polymer interlayer) in between the rigid substrates. In disclosed glass panel D-1, the dynamic bending stiffness of Glass 2 (in the third constrained layer) is essentially discontinued or decoupled from Glass 1 and Glass 3 because of the presence of the two tri-layer acoustic interlayers (1-1) each having a soft core layer. The third constrained layer has the highest bending stiffness of the three constrained layers and dominates the coincident frequency of the glass panel since the combined glass thickness of Glass 1 and Glass 3 is the highest combined thickness within the panel. Therefore, the dynamic bending stiffness in the coincident frequency region is controlled or determined by the surface glass sheets of Glass 1 and Glass 3. As a result, the coincident frequency of disclosed panel D-1 is at 6300 Hz, which is the same as the coincident frequency of comparative panel C-3, which is lighter and thinner than disclosed panel D-1 and has a combined glass thickness equal to the combined thickness of the outer or surface glass sheets of disclosed panel D-1 (i.e., Glass 1 and Glass 3). This is also true for disclosed panels D-3 and D-4. In disclosed panel D-2, the inner Glass 2 (2.3 mm) is thicker than either of the two outer glass sheets, Glass 1 (1.6 mm) and Glass 3 (0.7 mm), therefore, unlike disclosed glass panel D-1, where the outer surface glass sheets have the dominant effect, the constrained layer **Glass 1** (1.6 mm)//Interlayer (I-1)//**Glass 2** (2.3 mm) has the highest bending stiffness of the three constrained layers and dominates the dynamic bending stiffness in the coincident frequency region. The presence of Glass 3 joined to the surface of Glass 2 via an acoustic interlayer also has an effect on the overall dynamic bending stiffness of the glass panel. As a result, the coincident frequency of disclosed glass panel D-2 is at 5000 Hz, lower than that of disclosed glass panel D-1.

**Example 2: Three or More Glass Sheets and Two or More Non-Acoustic Interlayers**

Table 3 summarizes the properties of interlayers I-4 and I-5. Interlayers I-4 and I-5 are non-acoustic (standard or conventional, monolithic) interlayers having a glass transition temperature of 30°C. These interlayers were used to construct various multiple layer panels as described below and shown in Table 4.

**Table 3: Standard Interlayer Compositions**

| Interlayer No. | Resin residual hydroxyl content wt.% | Plasticizer content phr | Interlayer thickness mil | Glass transition temperature °C | Damping loss factor at 20°C |
|---|---|---|---|---|---|
| I-4 | 19 | 38 | 30 | 30 | 0.03 |
| I-5 | 19 | 38 | 15 | 30 | 0.03 |

Comparative glass panels C-8 and C-7 were produced in the same manner as previous panels except that non-acoustic interlayers I-4 and I-5 (shown in Table 3) were used instead of the acoustic interlayers.

Comparative glass panel C-7 consisted of two glass sheets and a non-acoustic interlayer, specifically a first glass sheet 2.3 mm thick (Glass 1), a second glass sheet 2.3 mm (Glass 4), and a non-acoustic interlayer 30 mils thick (I-4) between the two glass sheets. The combined glass thickness (Glass 1 + Glass 4) was 4.6 mm. (As an alternative, comparative glass panel C-7 could have been produced using two layers of non-acoustic interlayer (I-5), each 15 mils thick, to form an interlayer 30 mils thick between the two glass sheets.)

Comparative glass panel C-8 consisted of three glass sheets and two non-acoustic interlayers, specifically a first glass sheet 2.3 mm thick (Glass 1), a second glass sheet 0.7 mm thick (Glass 2), a third glass of 1.6 mm thick (Glass 3), a first non-acoustic interlayer 15 mils thick (I-5) between Glass 1 and Glass 2, and a second identical non-acoustic interlayer (I-5) between Glass 2 and Glass 3 (similar to disclosed panel D-1 except non-acoustic interlayers were used). The combined glass thickness of the glass panel (Glass 1 + Glass 2 + Glass 3) was 4.6 mm (equal to the combined glass thickness of comparative glass panel C-7). Both comparative panels C-7 and C-8 had the same combined interlayer thickness of 30 mils.

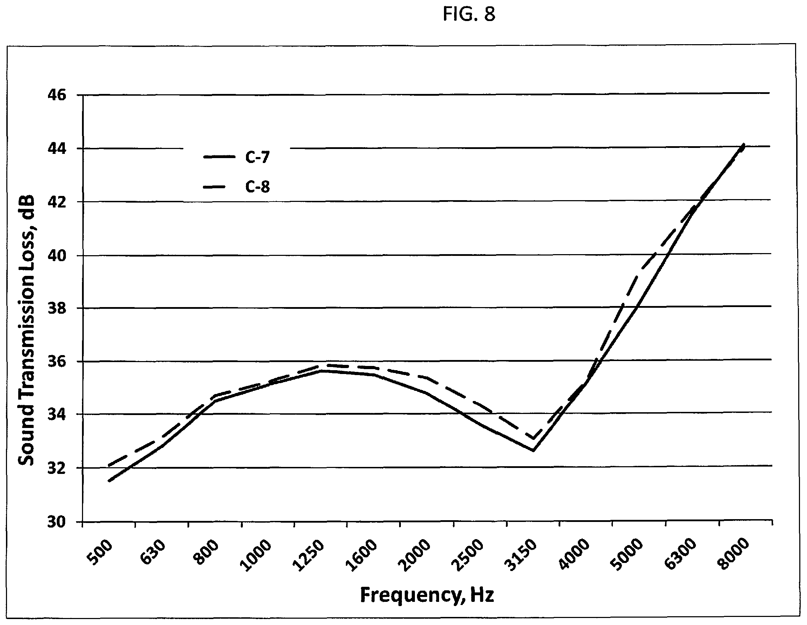

Coincident frequency and STL at coincident frequency from sound transmission loss measurement of glass panels C-7 and C-8 are summarized in Table 4. Plots of the sound transmission loss in the 500 to 8000 third-octave band frequency region are shown in FIG. 8. Details of the panel constructions are shown in Table 4 below.

**Table 4: Glass Panel Constructions and Sound Insulation Properties**

| Glass Panel No. | C-7 | C-8 |
|---|---|---|
| Glass-1 Thickness (mm) | 2.3 | 2.3 |
| 1st Interlayer | I-4 | I-5 |
| Glass-2 Thickness (mm) | - | 0.7 |
| 2nd Interlayer | - | I-5 |
| Glass-3 Thickness (mm) | - | 1.6 |
| Glass-4 Thickness (mm) | 2.3 | - |
| Total No. of glass sheets | 2 | 3 |
| Total No. of acoustic interlayers | 0 | 0 |
| Combined glass thickness (mm) | 4.6 | 4.6 |
| Coincident frequency (Hz) | 3150 | 3150 |
| STL at coincident frequency (dB) | 32.6 | 33.1 |

As shown in FIG. 8, in the range of about 500 Hz to about 1000 Hz, where the sound transmission is determined by the mass of the glass panel for non-acoustic glass panels, the transmission loss increased as the frequency increased, and is about the same for comparative glass panels C-7 and C-8. Comparative glass panels C-7 and C-8 have the same combined glass thickness and interlayer thickness (same mass), even though comparative panel C-8 has three glass sheets with a portion of the glass thickness (0.7 mm sheet) between the two non-acoustic interlayers instead of at the surface or in the outer glass sheets as in comparative panel C-7. Comparative glass panels C-7 and C-8 both exhibited a coincident frequency at about 3150 Hz. Unlike disclosed glass panel D-1 (in Table 2, which had two acoustic multilayer interlayers instead of non-acoustic interlayers), which improved the sound insulation in the coincident frequency region by about 2 dB and shifted the coincident frequency to a higher frequency, comparative glass panel C-8, which had a similar construction except for the interlayer type (non-acoustic vs. acoustic multilayer), did not significantly improve the sound insulation property compared to comparative glass panel C-7. Comparative glass panel C-8, consisting of all non-acoustic interlayers but with three glass sheets, had little effect on sound insulation property of the glass panel, demonstrates that relocating a portion of the glass in a panel with only non-acoustic interlayers had little effect on the sound insulating properties.

**Example 3: Three or More Glass Sheets and One Acoustic Interlayer and One (or More) Non-Acoustic Interlayer Sheets**

Table 5 summarizes the properties of interlayers I-5, I-6 and I-7. Interlayer I-5 is a non-acoustic interlayer (from Table 3), and interlayers I-6 and I-7 are tri-layer acoustic interlayers. The interlayers were used for constructing multiple layer glass panels C-9, C-10, and C-11 as shown in Table 6 and further described below.

**Table 5: Non-Acoustic Interlayer and Tri-layer Interlayer Compositions**

| Interlayer No. | I-5 | I-6 | I-7 |
|---|---|---|---|
| Stiff layer residual hydroxyl content, wt.% | 19 | 19 | 19 |
| Stiff layer plasticizer content, phr | 38 | 38 | 38 |
| Combined stiff layer thickness, mil | 15 | 15.5 | 30.5 |
| Soft layer residual hydroxyl content, wt.% | - | 11 | 11 |
| Soft layer plasticizer content, phr | - | 75 | 75 |
| Soft layer thickness, mil | - | 4.5 | 4.5 |
| Interlayer thickness, mil | 15 | 20 | 35 |
| Glass transition temperature, °C | 30 | 0 (soft layer) 30 (stiff layer) | 0 (soft layer) 30 (stiff layer) |
| Damping loss factor at 20°C | 0.03 | 0.28 | 0.32 |

Comparative glass panels C-9, C-10 and C-11 were produced as described below. Comparative glass panel C-9 consisted of two glass sheets and one acoustic interlayer (similar to comparative glass panel C-1), specifically a first glass sheet 2.3 mm thick (Glass 1), a second glass sheet 2.3 mm thick (Glass 4), and an acoustic interlayer 35 mils thick (I-7) between the two glass sheets, where the combined glass thickness (Glass 1 + Glass 4) was 4.6 mm, the combined stiff layer thickness was 30.5 mils, and the soft layer thickness was 4.5 mils.

Comparative glass panel C-10 consisted of two glass sheets and two non-acoustic interlayers, specifically a first glass sheet 2.3 mm thick (Glass 1), a second glass sheet 2.3 mm thick (Glass 4), a first acoustic tri-layer interlayer (I-6) 20 mils thick, and a second non-acoustic interlayer (I-5) 15 mils thick that were laminated together to create a new tri-layer interlayer having a total thickness of 35 mils (combined stiff layers of 30.5 mils and soft layer of 4.5 mils, the same combined thicknesses as interlayer I-7 but the position of the soft core layer was off-center in this tri-layer interlayer). The combined tri-layer interlayer produced was laminated between the two glass sheets to form a glass panel having a combined glass thickness of 4.6 mm (similar to comparative glass panel C-2).

Comparative glass panel C-11 consisted of three glass sheets and two interlayers, specifically a first glass sheet 2.3 mm thick (Glass 1), a second glass sheet 0.7 mm thick (Glass 2), a third glass sheet 1.6 mm thick (Glass 3), a first tri-layer acoustic interlayer (I-6) 20 mils thick between Glass 1 and Glass 2, and a second non-acoustic interlayer (I-5) 15 mils thick between Glass 2 and Glass 3. The combined glass thickness of the glass panel (Glass 1 + Glass 2 + Glass 3) was also 4.6 mm, equal to the combined glass thickness of the comparative glass panels C-9 and C-10. The combined stiff layer thickness (30.5 mils) and combined soft layer thickness (4.5 mils) were also identical to those in comparative glass panels C-9 and C-10.

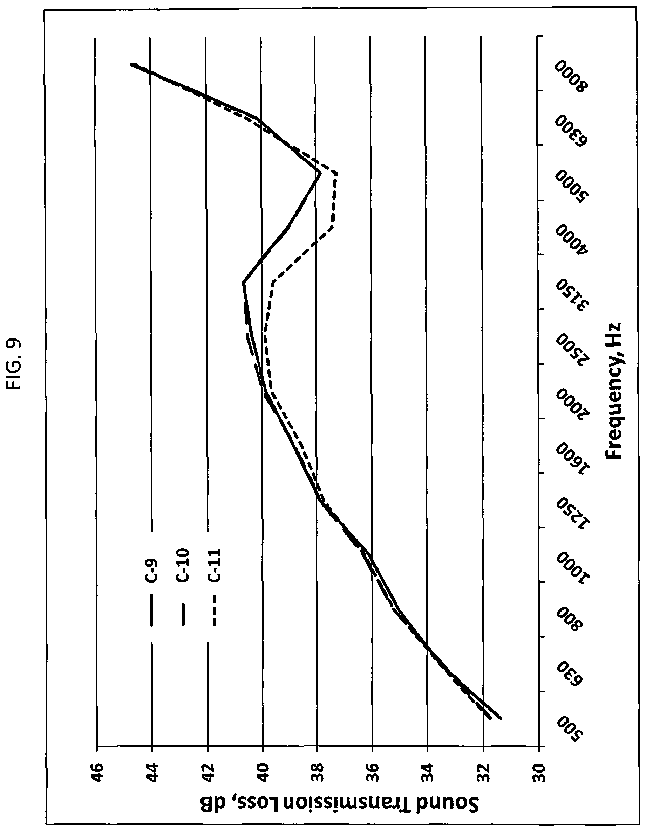

Coincident frequency and STL at coincident frequency of comparative glass panels C-9, C-10 and C-11 are summarized in Table 6 below. Plots of sound transmission loss in the 500 to 8000 third-octave band frequency region are shown in FIG. 9. Details of the panels are also shown in Table 6 below.

**Table 6: Glass Constructions and Sound Insulation Properties**

| Glass Panel No. | C-9 | C-10 | C-11 |
|---|---|---|---|
| Glass-1 Thickness (mm) | 2.3 | 2.3 | 2.3 |
| 1st Interlayer | I-7 | I-6 | I-6 |
| Glass-2 Thickness (mm) | - | - | 0.7 |
| 2nd Interlayer | - | I-5 | I-5 |
| Glass-3 Thickness (mm) | - | - | 1.6 |
| Glass-4 Thickness (mm) | 2.3 | 2.3 | - |
| Total No. of glass sheets | 2 | 2 | 3 |
| Total No. of acoustic interlayers | 1 | 1 | 1 |
| Combined stiff layer thickness (mils) | 30.5 | 30.5 | 30.5 |
| Combined soft layer thickness (mils) | 4.5 | 4.5 | 4.5 |
| Combined glass thickness (mm) | 4.6 | 4.6 | 4.6 |
| Coincident frequency (Hz) | 5000 | 5000 | 5000 |
| STL at coincident frequency (dB) | 37.8 | 37.8 | 37.3 |

As shown in FIG. 7, in the region of 500 Hz to about 2000 Hz the transmission loss increased as the frequency increased, similar to panels C-1, C-2, C-3 and D-1, as shown in FIG. 6. Because of the presence of the acoustic interlayer, these panels exhibited STL extending the mass controlled region to a higher frequency of about 2000 Hz from 1000 Hz, the typical frequency for non-acoustic laminated glass panels (as shown in FIG. 8 and comparative panels C-7 and C-8). The presence of an acoustic interlayer also increased the STL in the 500 to 2000 Hz range. Comparative panels C-9, C-10 and C-11 all had about the same STL in 500 to 2000 Hz range (37.3 to 37.8 dB) since these panels had the same combined glass thickness and interlayer thickness (the same overall mass), despite comparative glass panel C-11 having a portion of the glass thickness (0.7 mm) between the two interlayers instead of in the outer or surface glass sheets. In the coincident frequency region, comparative glass panels C-9 and C-10 had about the same STL as the frequency increased above the mass controlled region (above about 2000 Hz), and the soft layer position (whether centered in the interlayer as in comparative glass panel C-9 or off-centered in the interlayer as in comparative glass panel C-10), had little effect on the sound insulation. Both comparative glass panels C-9 and C-10 exhibited a coincident frequency at 5000 Hz. Comparative glass panel C-11 had slightly lower sound insulation in the coincident frequency region (about 1 dB less) and exhibited the same coincident frequency as comparative glass panels C-9 and C-10 (5000 Hz). Comparative glass panel C-11 was actually inferior in the coincident frequency region although the STL in the mass controlled frequency region was about the same as in comparative panels C-9 and C-10. This is in contrast to disclosed glass panel D-1 (which had a construction similar to comparative panel C-11 of three glass sheets and two interlayers where in disclosed panel D-1 both interlayers were acoustic interlayers). Disclosed panel D-1 showed an improved STL in the coincident frequency region of about 2 dB.

Comparative glass panel C-11, like disclosed panels D-1 through D-4 and comparative panel C-8, can also be considered to have three constrained layers: 1) **Glass 1** (2.3 mm)//Interlayer (I-6)//**Glass-2** (0.7 mm); 2) **Glass 2** (0.7 mm//Interlayer (I-5)//**Glass 3** (1.6 mm); and 3) **Glass 1** (2.3 mm)//Interlayer (I-6)//Glass-2 (0.7 mm)//Interlayer (I-5)//**Glass 3** (1.6 mm). Glass 2 and Glass 3 in the second constrained layer were held together with a non-acoustic, stiff interlayer (I-5), which is different from glass panels D-1 through D-4 where Glass 2 and Glass 3 in the second constrained layer were held together with an acoustic tri-layer. The sound insulation property of the glass panel was therefore dominated by the dynamic responses of the two constrained layers, an acoustic constrained layer of **Glass 1** (2.3 mm)//Interlayer (I-6)//**Glass 2** (0.7 mm) and a non-acoustic, stiffer constrained layer of **Glass 2** (0.7 mm//(I-5)//**Glass 3** (1.6 mm), or in other words, by the dynamic responses of an acoustic region and a non-acoustic region of poor sound insulation. The sound insulation of the acoustic region was partially offset by the dynamic bending response of the non-acoustic region, which resulted in the glass panel having poor sound insulation or lower STL than the disclosed panels.

While the disclosure has been disclosed in conjunction with a description of certain embodiments, including those that are currently believed to be the preferred embodiments, the detailed description is intended to be illustrative and should not be understood to limit the scope of the present disclosure. As would be understood by one of ordinary skill in the art, embodiments other than those described in detail herein are encompassed by the present disclosure.

### Claims

1. A sound insulating multiple layer glass panel comprising:

   a first glass panel having a first glass thickness;
   a first interlayer having a first interlayer thickness and a first glass transition temperature of less than 25°C adjacent the first glass panel;
   a second glass panel having a second glass thickness adjacent the first interlayer;
   a second interlayer having a second interlayer thickness and a second glass transition temperature of less than 25°C adjacent the second glass panel;
   a third glass panel having a third glass thickness adjacent the second interlayer;
   wherein the multiple layer glass panel has a combined glass thickness, a combined interlayer thickness and a total thickness;
   wherein the second glass panel is disposed between the first interlayer and the second interlayer;
   wherein at least one of the first or the second interlayer is a multilayer interlayer having at least three layers of at least a first stiff layer, a second stiff layer, and a third soft layer disposed between the first and second stiff layers and the glass transition temperature of the soft layer is less than 25°C, the glass temperature being measured as set out in the description.

2. The multiple layer panel of claim 1, wherein the first and second interlayers are multilayer interlayers having at least three layers.

3. The multiple layer panel of claim 1, wherein at least one interlayer comprises poly(vinyl acetal) resin.

4. The multiple layer panel of claim 1, wherein the multiple layer glass panel has a damping loss factor of at least 0.10 at 20°C, the damping loss factor being measured according to ISO standard 16940.

5. The multiple layer panel of claim 1, wherein the multiple layer glass panel has a sound transmission loss (STL) of at least 34 decibels (dB) at 20°C the sound transmission loss being measured according to ASTM E90.

6. The multiple layer panel of claim 1, wherein the multiple layer panel has a sound transmission loss (STL) that is at least 2 decibels (dB) greater than a panel having the same combined panel thicknesses, combined interlayer thickness and total thickness, the sound transmission loss being measured according to ASTM E90.

7. The multiple layer panel of claim 1, wherein at least two of the first, second and third panels have the same panel thickness.

8. The multiple layer panel of claim 1, wherein the first, second and third panels each have a different panel thickness.

9. The multiple layer panel of claim 2, wherein each of the multilayer interlayers comprise two stiff outer layers and a softer inner layer between the two stiff outer layers.

10. The multiple layer panel of claim 1, wherein at least two interlayers comprise poly(vinyl acetal) resin.

**Patentansprüche**

1. Eine schalldämmende Mehrschicht-Glasscheibe, aufweisend:

   eine erste Glasscheibe mit einer ersten Glasdicke,
   eine erste Zwischenschicht mit einer ersten Zwischenschichtdicke und einer ersten Glasübergangstemperatur von weniger als 25 °C, die an die erste Glasscheibe angrenzt,
   eine zweite Glasscheibe mit einer zweiten Glasdicke, die an die erste Zwischenschicht angrenzt,
   eine zweite Zwischenschicht mit einer zweiten Zwischenschichtdicke und einer zweiten Glasübergangstemperatur von weniger als 25 °C, die an die zweite Glasscheibe angrenzt,
   eine dritte Glasscheibe mit einer dritten Glasdicke, die an die zweite Zwischenschicht angrenzt,
   wobei die mehrschichtige Glasscheibe eine kombinierte Glasdicke, eine kombinierte Zwischenschichtdicke und eine Gesamtdicke aufweist,
   wobei die zweite Glasscheibe zwischen der ersten Zwischenschicht und der zweiten Zwischenschicht angeordnet ist,
   wobei mindestens eine der ersten oder zweiten Zwischenschichten eine mehrschichtige Zwischenschicht ist, die mindestens drei Schichten aufweist, nämlich mindestens eine erste steife Schicht, eine zweite steife Schicht und eine dritte weiche Schicht, die zwischen der ersten und zweiten steifen Schicht angeordnet ist, und
   wobei die Glasübergangstemperatur der weichen Schicht weniger als 25 °C beträgt,
   wobei die Glastemperatur gemäß der Beschreibung gemessen wird.

2. Mehrschichtige Scheibe nach Anspruch 1, wobei die erste und zweite Zwischenschicht mehrschichtige Zwischenschichten mit mindestens drei Schichten sind.

3. Mehrschichtige Scheibe nach Anspruch 1, wobei mindestens eine Zwischenschicht Polyvinylacetalharz umfasst.

4. Mehrschichtige Scheibe nach Anspruch 1, wobei die mehrschichtige Glasscheibe einen Dämpfungsverlustfaktor von mindestens 0,10 bei 20 °C aufweist, wobei der Dämpfungsverlustfaktor gemäß der Norm ISO 16940 gemessen wird.

5. Die mehrschichtige Scheibe nach Anspruch 1, wobei die mehrschichtige Glasplatte eine Schalldurchlässigkeit (STL) von mindestens 34 Dezibel (dB) bei 20 °C aufweist, wobei die Schalldurchlässigkeit gemäß ASTM E90 gemessen wird.

6. Mehrschichtige Scheibe nach Anspruch 1, wobei die mehrschichtige Scheibe eine Schalldurchlässigkeitsdämpfung (STL) aufweist, die mindestens 2 Dezibel (dB) größer ist als bei einer Platte mit derselben kombinierten Scheibendicke, kombinierten Zwischenschichtdicke und Gesamtdicke, wobei die Schalldurchlässigkeitsdämpfung gemäß ASTM E90 gemessen wird.

7. Mehrschichtige Platte nach Anspruch 1, wobei mindestens zwei der ersten, zweiten und dritten Platten die gleiche Plattendicke aufweisen.

8. Mehrschichtige Platte nach Anspruch 1, wobei die erste, zweite und dritte Platte jeweils eine unterschiedliche Plattendicke aufweisen.

9. Mehrschichtige Platte nach Anspruch 2, wobei jede der mehrschichtigen Zwischenschichten zwei steife Außenschichten und eine weichere Innenschicht zwischen den beiden steifen Außenschichten aufweist.

10. Mehrschichtige Platte nach Anspruch 1, wobei mindestens zwei Zwischenschichten Polyvinylacetalharz umfassen.

**Revendications**

1. Panneau de verre multicouche d'isolation acoustique comprenant :

   un premier panneau de verre ayant une première épaisseur de verre ;
   un premier intercalaire ayant une première épaisseur d'intercalaire et une première température de transition vitreuse inférieure à 25 °C adjacent au premier panneau de verre ;
   un deuxième panneau de verre ayant une deuxième épaisseur de verre adjacent au premier intercalaire ;
   un deuxième intercalaire ayant une deuxième épaisseur d'intercalaire et une deuxième température de transition vitreuse inférieure à 25 °C adjacent au deuxième panneau de verre ;
   un troisième panneau de verre ayant une troisième épaisseur de verre adjacent au deuxième intercalaire ;
   dans lequel le panneau de verre multicouche a une épaisseur de verre combinée, une épaisseur d'intercalaire combinée et une épaisseur totale ;
   dans lequel le deuxième panneau de verre est disposé entre le premier intercalaire et le deuxième intercalaire ;
   dans lequel au moins un intercalaire parmi le premier ou le deuxième intercalaire est un intercalaire multicouche ayant au moins trois couches parmi au moins une première couche rigide, une deuxième couche rigide, et une troisième couche souple disposée entre les première et deuxième couches rigides et la température de transition vitreuse de la couche souple est inférieure à 25 °C, la température de transition vitreuse étant mesurée comme indiqué dans la description.

2. Panneau multicouche selon la revendication 1, dans lequel les premier et deuxième intercalaires sont des intercalaires multicouches ayant au moins trois couches.

3. Panneau multicouche selon la revendication 1, dans lequel au moins un intercalaire comprend une résine de poly(acétal de vinyle).

4. Panneau multicouche selon la revendication 1, dans lequel le panneau de verre multicouche a un facteur de perte par amortissement d'au moins 0,10 à 20 °C, le facteur de perte par amortissement étant mesuré selon la norme ISO 16940.

5. Panneau multicouche selon la revendication 1, dans lequel le panneau de verre multicouche a une perte de transmission du son (STL) d'au moins 34 décibels (dB) à 20 °C, la perte de transmission du son étant mesurée selon la norme ASTM E90.

6. Panneau multicouche selon la revendication 1, dans lequel le panneau multicouche a une perte de transmission du son (STL) qui est supérieure d'au moins 2 décibels (dB) à celle d'un panneau ayant les mêmes épaisseurs de panneau combinées, épaisseur d'intercalaire combinée et épaisseur totale, la perte de transmission du son étant mesurée selon la norme ASTM E90.

7. Panneau multicouche selon la revendication 1, dans lequel au moins deux des premier, deuxième et troisième panneaux ont la même épaisseur de panneau.

8. Panneau multicouche selon la revendication 1, dans lequel les premier, deuxième et troisième panneaux ont chacun une épaisseur de panneau différente.

9. Panneau multicouche selon la revendication 2, dans lequel chacun des intercalaires multicouches comprend deux couches externes rigides et une couche interne plus souple entre les deux couches externes rigides.

10. Panneau multicouche selon la revendication 1, dans lequel au moins deux intercalaires comprennent une résine de poly(acétal de vinyle).

FIG. 1

| Glass 1 |
| Acoustic Interlayer A |
| Glass 2 |
| Acoustic Interlayer B |
| Glass 3 |

FIG. 2

| Glass 1 |
|---|
| Stiff Layer 1 |
| Soft Layer 2 |
| Stiff Layer 3 |
| Glass 2 |
| Stiff Layer 4 |
| Soft Layer 5 |
| Stiff Layer 6 |
| Glass 3 |

Interlayer A

Interlayer B

FIG. 3

| Glass 1 |
| Stiff Layer 7 |
| Soft Layer 8 |
| Stiff Layer 9 |
| Glass 4 |

Interlayer C

FIG. 4

| Glass-1 |
| Interlayer A |
| Interlayer B |
| Glass-4 |

FIG. 5

| Glass 1 |
|:---:|
| Interlayer A |
| Interlayer B |
| Glass 3 |

FIG. 6

FIG. 7

FIG. 8

EP 3 515 704 B1

FIG. 9

EP 3 515 704 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5340654 A
- US 5190826 A
- US 7510771 B
- US 2008102280 A1
- US 2016159043 A1
- US 2013236711 A1
- US 2016111077 A1

- EP 0204188 A1
- AU 2012204079 B2
- US 2002150744 A1
- US 2015158275 A1
- US 2282057 A
- US 2282026 A

**Non-patent literature cited in the description**

- Vinyl Acetal Polymers. **B.E. WADE**. Encyclopedia of Polymer Science & Technology. 2003, vol. 8, 381-399